# EUROPÄISCHE PATENTSCHRIFT

(11) **EP 1 833 867 B1**
(45) Veröffentlichungstag und Bekanntmachung des Hinweises auf die Patenterteilung: **06.08.2008**
(21) Anmeldenummer: 05850339.2
(22) Anmeldetag: 22.12.2005
(51) Int. Cl.: C08F 283/12, C08F 292/00, C08F 2/44, C08K 9/06

(54) **NANOPARTIKELHALTIGE ORGANOCOPOLYMERE**
ORGANIC COPOLYMERS CONTAINING NANOPARTICLES
COPOLYMERES ORGANIQUES CONTENANT DES NANOPARTICULES

(30) Priorität: 05.01.2005 DE 102005000824
(43) Veröffentlichungstag der Anmeldung: 19.09.2007
(73) Patentinhaber: Wacker Chemie AG, 81737 München (DE)
(72) Erfinder: MINGE, Oliver, 80337 München (DE); WEIDNER, Richard, 84489 Burghausen (DE); SANDMEYER, Frank, 84508 Burgkirchen (DE); WEITZEL, Hans-Peter, 84571 Reischach (DE)
(74) Vertreter: Schuderer, Michael
(86) Internationale Anmeldenummer: PCT/EP2005/013919
(87) Internationale Veröffentlichungsnummer: WO 2006/072408

(56) Entgegenhaltungen:
- EP-A- 0 691 363
- DE-A1- 10 100 633
- US-A- 4 617 327

## Beschreibung

Die Erfindung betrifft Copolymerisate von ethylenisch ungesättigten Monomeren und von ethylenisch funktionalisierten Nanopartikeln in Form deren wässrigen Dispersionen oder in Wasser redispergierbaren Pulver, deren Herstellung und Verwendung.

Polymerdispersionen, welche Partikel mit Abmessungen im Nanometerbereich, das heißt Partikel mit Abmessungen kleiner 100 nm in wenigstens einer Dimension, enthalten, weisen gegenüber Compositen mit weniger feinteiligen Partikeln (etwa im Mikrometerbereich) eine Fülle überlegener und neuartiger Eigenschaften auf. Diese umfassen beispielsweise die Lichtstreuung, das Adsorptions- und Absorptionsverhalten, die antibakteriellen Eigenschaften oder überlegene Kratz- und Reissfestigkeiten. Diese "nano-Effekte" hängen unmittelbar mit der Größe der Partikel zusammen und gehen verloren, wenn die Partikel bestimmte Abmessungen überschreiten.

Weiterhin sind die erwünschten Effekte nur dann besonders ausgeprägt, wenn es gelingt die Teilchen in der Polymermatrix möglichst homogen zu verteilen und wenn möglich chemisch anzubinden, um ein Austragen oder Agglomerationsphänomene und damit einen Verlust dieser speziellen Eigenschaften zu vermeiden.

Eine Möglichkeit der chemischen Anbindung von nano-skaligen-Metalloxiden an polymere Matrizen ist beispielsweise in der DE 10212121 A1 für nano-Zinkoxid-Polymerdispersionen beschrieben. Dabei werden die Zinkoxidpartikel in einem halogenhaltigen Medium dispergiert, die Dispersion in eine wässrige Lösung hydroxylgruppenhaltiger anorganischer Polymere, beispielsweise von hydrolysierten Polyalkyl(alkoxy)siloxanen, gegeben und anschließend die halogenhaltigen Bestandteile durch Destillation entfernt. Die chemische Anbindung an das Polymer erfolgt somit über die Ausbildung einer Zn-O-Si-O-C-Brücke und ist damit sehr labil gegenüber saurer oder alkalischer Spaltung.

Handelt es sich bei den Partikeln um Siliconharze, so ist bekannt, dass diese zur chemischen Modifizierung von organischen Polymeren oder als Bindemittel von Beschichtungen eingesetzt werden können, um die Beständigkeit der Beschichtungen zum Beispiel gegen Witterungseinflüsse, chemischen Angriff und thermische Belastung zu erhöhen. Kommerziell erhältliche Produkte sind zum Beispiel Siliconpolyester, hybride Systeme aus Siliconharzen und organischen Polymeren, wie sie zur Herstellung von Metallbandbeschichtungen Einsatz finden. Diese Produkte werden vorzugsweise durch chemische Umsetzung und Bindungsbildung zwischen dem Siliconharz und dem organischen Polymer hergestellt. Eine chemische Anbindung der Siliconharze an das organische Polymer erfolgt dabei in der Regel unter Ausbildung einer Si-O-C-Brücke zwischen beiden, üblicherweise in einem Lösemittelprozess. Für wässrige Medien kennt die Literatur verschiedene Produkte aus Kombinationen von organischen Polymeren mit Siliconharzen oder harzartigen oligomeren Siliconstrukturen und Verfahren zu deren Herstellung:

Die EP 1256611 A2 beschreibt eine wässrige Dispersion, erhalten aus einer Mischung und Emulsion von nicht radikalisch polymerisierbaren Alkoxysilanen oder deren Hydrolyse- und Kondensationprodukten mit radikalisch polymerisierbaren Monomeren. Die Silane oder die daraus abgeleiteten Produkte werden hydrolysiert und kondensiert, während die organischen Monomere radikalisch polymerisiert werden. Die eingesetzten Silane sind dabei Alkyl- oder Arylalkoxysilane, wobei bis zu drei an Silicium gebundene Alkoxygruppen vorliegen können. Daraus sind durch Hydrolyse und Kondensation auch Harze oder harzartige Oligomere zugänglich.

Die EP 1197502 A2 lehrt die Herstellung einer wässrigen Harzemulsion durch radikalische Polymerisation ethylenisch ungesättigter Monomere in Gegenwart von hydrolysierbaren und kondensationsfähigen Mono-, Di- oder Trialkoxyalkyl- oder -aryl-Silanen, die nicht radikalisch polymerisierbar sind.

In der EP 943634 A1 werden wässrige Latices zur Verwendung als Beschichtungsmittel beschrieben, welche durch Copolymerisation von ethylenisch ungesättigten Monomeren in Gegenwart eines Silanolgruppen enthaltenden Siliconharzes hergestellt werden. Es bilden sich dabei interpenetrating networks (IPN) zwischen den Polymerketten und der Polysiloxanketten.

Die mit den genannten Verfahren erhältlichen Siliconharz-Emulsionspolymerisate sowie die ansonsten hinreichend bekannten physikalischen Mischungen von Siliconharzemulsionen und organischen Polymerdispersionen zum Einsatz beispielsweise im Bereich der Siliconharzfassadenfarben, zeichnen sich dadurch aus, dass das Siliconharz und das organische Polymer ausschließlich oder überwiegend in Form physikalischer Abmischungen vorliegen. Chemische Bindungen zwischen dem Siliconanteil und dem organischen Anteil bauen sich eher zufällig auf, wobei es sich dabei um hydrolyseanfällige Si-O-C-Bindungen handelt. Die Si-O-C-Bindung steht dabei stets in Konkurrenz zur Si-O-Si-Brückenbildung durch Kondensation der Silanolgruppen miteinander.

Die Kondensationsreaktionen der Silanbausteine oder ihrer hydrolysierten und teilweise kondensierten Oligomeren unter den hydrolytischen Bedingungen einer Emulsionspolymerisation sind nur unzureichend kontrollierbar. Es ist bekannt, dass vor allem Alkoxysilane mit kurzen sauerstoffgebundenen Alkylresten unter hydrolytischen Bedingungen eine ausgeprägte Neigung haben, bis hin zu festen Partikeln aufzukondensieren. Diese neigen zur Niederschlags- und Domänenbildung und damit Separation. Diese Neigung ist umso ausgeprägter, je mehr Alkoxygruppen am Silicium gebunden sind. In der Anwendung als Beschichtungsstoff kann sich dies in Form von Stippenbildung negativ auswirken. Die Produkte können durch Separation ihre Lagerstabilität und Gebrauchsfähigkeit einbüßen.

Eine definiertere Anbindung des Siliconbausteins mit dem organischen Polymer über die Ausbildung von C-C-Bindungen kann durch Copolymerisation von doppelbindungsfunktionalisierten Siliconen mit organischen Monomeren erfolgen. So werden beispielsweise in der EP 1308468 A1 hydrophob modifizierte Copolymerisate beschrieben, die dadurch erhalten werden, dass lineare Silicone mit bis zu zwei polymerisierbaren Gruppen in Emulsion mit organischen Monomeren copolymerisiert werden. Einen ähnlichen Ansatz verfolgt EP 352339 A1, in der vinylterminierte, lineare Polydimethylsiloxane mit (Meth)acrylat-Monomeren copolymerisiert werden. Die EP 771826 A2 beschreibt die Emulsionspolymerisation von (Meth)acrylsäureestern und Vinylaromaten, wobei zur Vernetzung difunktionelle acrylgruppen- oder vinylgruppenhaltige Silicone zugegeben werden. Die EP 635 526 A1 beschreibt funktionelle Pfropfpolymerisate auf Basis von Organopolysiloxanen, welche durch Aufpropfen von ethylenisch ungesättigten Monomeren auf Polyorganosiloxane erhalten werden, welche Wasserstoff oder funktionelle Gruppen, sowie ethylenisch ungesättigte Gruppen, enthalten.

Die Herstellung von partikelhaltigen Organocopolymerdispersionen ist Gegenstand von EP 1216262 B1 und EP 1235869 B1, wobei zur Herstellung einer wässrigen Dispersion aus anorganischen Feststoffteilchen und Organopolymer anorganische Feststoffteilchen eingesetzt werden, welche durch einen definierten Dispergiergrad und eine definierte elektrophoretische Mobilität gekennzeichnet sind, und in deren Gegenwart ethylenisch ungesättigte Monomere polymerisiert werden. In der EP 505230 A1 wird die Verkapselung von Siliciumoxidteilchen mit Organopolymer beschrieben, wobei zunächst die Siliciumdioxid-Partikel mit ethylenisch ungesättigten Alkoxysilanverbindungen funktionalisiert werden und anschließend in deren Anwesenheit in wässriger Dispersion ethylenisch ungesättigte Monomere polymerisiert werden.

Die Anbindung von Polymer an Nanopartikel war bisher unbefriedigend, weil keine stabile C-C-Bindung erhalten wurde. Es bestand daher die Aufgabe, partikelhaltige Dispersionen zur Verfügung zu stellen, bei denen in einfacher Weise eine stabile Anbindung des Polymerteils an das Nanopartikel erfolgt.

Die kovalente chemische Fixierung der Partikel an die organische Matrix über C-C-Bindungen im wässrigen Medium, wurde nun dadurch gelöst, dass die zu fixierenden Partikel mit einer speziellen Klasse ethylenisch ungesättigter Silane, die lediglich durch ein C-Atom zwischen Silan- und Organofunktion ("α-Silane") gekennzeichnet sind, funktionalisiert wurden. Die Silane weisen anders als bisher eingestzte Reagenzien eine hohe Reaktivität bezüglich Funktionalisierung auf und sind überraschenderweise gleichzeitig unter den Polymerisationsbedingungen stabil. Weiterhin wurde gefunden, dass die Polymerisationsbedingungen im Gegensatz zum Stand der Technik so gewählt werden, dass eine effektive Copolymerisation der hydrophoben Partikel mit organischen Monomeren im wässrigen Medium durchgeführt wird bei gleichzeitiger weitestgehender Beibehaltung der Partikelidentität.

Gegenstand der Erfindung sind Copolymerisate von ethylenisch ungesättigten Monomeren und von ethylenisch funktionalisierten Nanopartikeln in Form deren wässrigen Polymerdispersionen oder in Wasser redispergierbaren Polymerpulver, erhältlich mittels radikalisch initiierter Polymerisation in wässrigem Medium, und gegebenenfalls anschließender Trocknung der dabei erhaltenen Polymerdispersion, von
A) einem oder mehreren Monomeren aus der Gruppe umfassend Vinylester, (Meth)acrylsäureester, Vinylaromaten, Olefine, 1,3-Diene, Vinylether und Vinylhalogenide und gegebenenfalls weiteren damit copolymerisierbaren Monomeren, in Gegenwart von
B) mindestens einem Partikel P mit einem mittleren Durchmesser von ≤ 1000 nm, welches mit ethylenisch ungesättigten, radikalisch polymerisierbaren Gruppen funktionalisiert ist, dadurch gekennzeichnet, dass
   B1) als Partikel P ein oder mehrere aus der Gruppe der Metalloxide und Halbmetalloxide eingesetzt werden, und/oder
   B2) als Partikel P Siliconharze eingesetzt werden, welche aus Wiederholungseinheiten der allgemeinen Formel [R⁴_{(p+z)}SiO_{(4-p-z)/2}] (II) aufgebaut sind, wobei R⁴ gleich oder verschieden ist, und Wasserstoff-, Hydroxy-, sowie Alkyl-, Cycloalkyl-, Aryl-, Alkoxy- oder Aryloxyreste bedeutet, mit jeweils bis zu 18 C-Atomen, welche gegebenenfalls substituiert sein können, wobei für mindestens 20 Mol-% des jeweiligen Siliconharzes p + z = 0, 1 oder 3 beträgt,
   und wobei B1) und B2) jeweils mit einem oder mehreren α-Organosilanen der allgemeinen Formel (R¹O)₃₋ₙ(R²)ₙSi-(CR³₂)-X (I) funktionalisiert werden, wobei R¹ für Wasserstoff, einen Alkylrest mit 1 bis 6 Kohlenstoffatomen oder einen Arylrest steht, R² und R³ jeweils unabhängig voneinander für Wasserstoff, einen Alkylrest mit 1 bis 12 Kohlenstoffatomen oder einen Arylrest stehen, n die Werte 0, 1 oder 2 bedeuten kann, und X ein Rest mit 2 bis 20 Kohlenwasserstoffatomen mit einer ethylenisch ungesättigten Gruppe ist.

Geeignete Vinylester sind solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, iso-Butylacrylat, isoButylmethacrylat, t-Butylacrylat, t-Butylmethacrylat, 2-Ethylhexylacrylat und Norbornylacrylat. Besonders bevorzugt sind Methylacrylat, Methylmethacrylat, n-Butylacrylat, iso-Butylacrylat, t-Butylacrylat, 2-Ethylhexylacrylat, und Norbornylacrylat.

Als Vinylaromaten bevorzugt sind Styrol, alpha-Methylstyrol, die isomeren Vinyltoluole und Vinylxylole sowie Divinylbenzole. Besonders bevorzugt ist Styrol.

Unter den Vinylhalogenverbindungen sind Vinylchlorid, Vinylidenchlorid, ferner Tetrafluorethylen, Difluorethylen, Hexylperfluorethylen, 3,3,3-Trifluorpropen, Perfluorpropylvinylether, Hexafluorpropylen, Chlortrifluorethylen und Vinylfluorid zu nennen. Besonders bevorzugt ist Vinylchlorid.
Ein bevorzugter Vinylether ist beispielsweise Methylvinylether.

Die bevorzugten Olefine sind Ethen, Propen, 1-Alkylethene sowie mehrfach ungesättigte Alkene, und die bevorzugten Diene sind 1,3-Butadien und Isopren. Besonders bevorzugt sind Ethen und 1, 3-Butadien.

Gegebenenfalls können noch 0.1 bis 5 Gew.-%, bezogen auf das Gesamtgewicht der Monomere A), Hilfsmonomere copolymerisiert werden. Bevorzugt werden 0.5 bis 2.5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propan-sulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Besonders bevorzugt werden als Comonomere A) ein oder mehrere Monomere aus der Gruppe Vinylacetat, Vinylester von αverzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol, 1,3-Butadien. Besonders bevorzugt werden als Comonomere A) auch Gemische von Vinylacetat und Ethylen; Gemische von Vinylacetat, Ethylen und einem Vinylester von α-verzweigten Monocarbonsäuren mit 9 bis 11 C-Atomen; Gemische von n-Butylacrylat und 2-Ethylhexylacrylat und/oder Methylmethacrylat; Gemische von Styrol und einem oder mehreren Monomeren aus der Gruppe Methylacrylat, Ethylacrylat, Propylacrylat, n-Butylacrylat, 2-Ethylhexylacrylat; Gemische von Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; Gemische von 1,3-Butadien und Styrol und/oder Methylmethacrylat; wobei die genannten Gemische gegebenenfalls noch ein oder mehrere der obengenannten Hilfsmonomere enthalten können.

Die Monomerauswahl bzw. die Auswahl der Gewichtsanteile der Comonomere erfolgt dabei so, daß im allgemeinen eine Glasübergangstemperatur Tg von ≤ 60°C, vorzugsweise -50°C bis +60°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Der Anteil der Comonomere A beträgt vorzugsweise ≥ 50 Gew.-%, besonders bevorzugt 70 bis 90 Gew.-%., jeweils bezogen auf das Gesamtgewicht aus A) und funktionalisiertem B).

Geeignete Partikel P sind aus der Gruppe B1) Siliciumoxide und Metalloxide. Bei den Metalloxiden sind die Oxide der Metalle Aluminium, Titan, Zirkonium, Tantal, Wolfram, Hafnium, Zink und Zinn bevorzugt. Bei den Siliciumoxiden werden kolloidale Kieselsäure, pyrogene Kieselsäure, gefällte Kieselsäure, Kieselsole besonders bevorzugt. Bei den Metalloxiden sind Aluminiumoxide wie Korund, Aluminiummischoxide mit anderen Metallen und/oder Silicium, Titanoxide, Zirkonoxide, Eisenoxide besonders bevorzugt.

Bevorzugte Partikel P aus der Gruppe der Siliconharze sind solche, die sich zu mindestens 30 Mol-% aus Q-Einheiten aufbauen, das heißt für die p+z in der allgemeinen Wiederholungsformel [R⁴_{(p+z)}SiO_{(4-p-z)/2}] (II) die Bedeutung 0 hat. Besonders bevorzugte Siliconharze sind solche, die nur aus M- und Q-Einheiten aufgebaut sind, das heißt für die p+z in der allgemeinen Formel [R⁴_{(p+z)}SiO_{(4-p-z)/2}] (II) nur die Bedeutung 0 und 3 hat. Falls die Reste R⁴ substituiert sind, so können diese zusätzlich eines oder mehrere gleiche oder verschiedene Heteroatome ausgewählt aus O-, S-, Si-, Cl-, F-, Br-, P- oder N-Atomen enthalten. Darüber hinaus sind auch solche Siliconharze geeignet, die aus einer beliebigen Kombination von M-Einheiten (R₃SiO-), D-Einheiten (-OSiR₂O-), T-Einheiten (RSiO₃³⁻) und Q-Einheiten (SiO₄⁴⁻) bestehen, mit der Maßgabe, dass stets T- und/oder Q-Einheiten enthalten sind und ihr Anteil an den Einheiten, die das Siliconharz aufbauen, in Summe mindestens 20 Mol-% beträgt und bei Vorlage jeweils nur einer dieser Einheiten ihr Anteil jeweils mindestens 20 Mol-% ist.

Am meisten bevorzugte Siliconharze B2) sind solche, die sich im Wesentlichen nur aus M und Q Einheiten aufbauen, wobei das MolVerhältnis von M/Q-Einheiten von 30/70 bis 60/40 reicht, insbesondere bevorzugt sind Harze mit einem M/Q-Verhältnis von 35/65 bis 45/55. Weiterhin am meisten bevorzugte Harze sind solche, die zum überwiegenden Teil aus T-Einheiten bestehen, insbesondere solche die zu > 80 Mol-% aus T-Einheiten bestehen, ganz besonders solche die zu praktisch 100 Mol-% aus T-Einheiten bestehen.

Die Partikel P besitzen bevorzugt einen mittleren Durchmesser von 1 bis 1000 nm, besonders bevorzugt 1 bis 100 nm, wobei die Teilchengröße durch Transmissionselektronenmikroskopie der erhaltenen Dispersionen oder der aus den Dispersionen erhältlichen Filme bestimmt wird.

Unter α-Organosilane sind solche Silane zu verstehen, bei denen das Alkoxy-, Aryloxy- oder OH-substituierte Siliciumatom, direkt über eine Methylenbrücke mit einem ungesättigten Kohlenwasserstoffrest verbunden ist, welcher ein oder mehrere ethylenisch ungesättigte Kohlenstoffbindungen aufweist, wobei die Wasserstoffreste der Methylenbrücke auch durch Alkyl- und/oder Arylreste ersetzt sein können, und eine C=C-Doppelbindung in α-Stellung zum Si-Atom steht.

Geeignete α-Organosilane der Formel (R¹O)₃₋ₙ(R²)ₙSi-(CR³₂)-X (I) sind auch solche in denen die Kohlenstoffkette der Reste R¹, R² und R³ durch nicht benachbarte Sauerstoff-, Schwefel-, oder NR⁴-Gruppen unterbrochen sind. Bevorzugt sind als Reste R¹ und R² unsubstituierte Alkylgruppen mit 1 bis 6 C-Atomen und als Rest R³ Wasserstoff. Der Rest X kann linear, verzweigt oder cyclisch sein. Neben der Doppelbindung können auch weitere funktionelle Gruppen vorhanden sein, die in der Regel gegenüber einer olefinischen Polymerisation inert sind, beispielsweise Halogen-, Carboxy-, Sulfinato-, Sulfonato-, Amino-, Azido-, Nitro-, Epoxy-, Alkohol-, Ether-, Ester-, Thioether- und Thioester-Gruppen sowie aromatische iso- und heterocyclische Gruppen. Bevorzugte Beispiele für X sind einfach ungesättigte C₂- bis C₁₀-Reste, am meisten bevorzugt sind als Rest X der Acryl- und Methacrylrest.

Der Anteil der funktionalisierten Partikel P beträgt 0.5 bis 50 Gew.-%, vorzugsweise 1 bis 30 Gew.-%, besonders bevorzugt 10 bis 20 Gew.-%, jeweils bezogen auf das Gesamtgewicht der Komponente A) und der funktionalisierten Komponente B).

Zusätzlich können in den erfindungsgemäßen Polymerdispersionen und Polymerpulvern noch bis zu 30 Gew-%, bezogen auf das Gesamtgewicht der Komponenten A) und B), mindestens eines Silans der allgemeinen Formel (R⁵)₄₋ₘ-Si-(OR⁶)ₘ (III) enthalten sein, wobei m eine Zahl im Wert von 1, 2, 3 oder 4 bedeutet, R⁵ ein organofunktioneller Rest ist, ausgewählt aus der Gruppe Alkoxyrest und Aryloxyrest mit jeweils 1 bis 12 C-Atomen, Phosphonsäuremonoesterrest, Phosphonsäurediesterrest, Phosphonsäurerest, Methacryloyloxyrest, Acryloyloxyrest, Vinylrest, Mercaptorest, Isocyanatorest, wobei der Isocyanatorest gegebenenfalls zum Schutze vor chemischen Reaktionen reaktionsblockiert sein kann, Hydroxyrest, Hydroxyalkylrest, Vinylrest, Epoxyrest, Glycidyloxyrest, Morpholinorest, Piperazinorest, einen primären, sekundären oder tertiären Aminorest mit einem oder mehreren Stickstoffatomen, wobei die Stickstoffatome durch Wasserstoff oder einwertige aromatische, aliphatische oder cycloaliphatische Kohlenwasserstoffreste substituiert sein können, Carbonsäurerest, Carbonsäureanhydridrest, Aldehydrest, Urethanrest, Harnstoffrest, wobei der Rest R⁵ unmittelbar am Siliciumatom gebunden sein kann oder durch eine Kohlenstoffkette von 1 bis 6 C-Atomen davon getrennt sein kann und R⁶ einen einwertigen lineraren oder verzweigten aliphatischen oder cycloaliphatischen Kohlenwasserstoffrest oder einen einwertigen aromatischen Kohlenwasserstoffrest mit jeweils 1 bis 12 C-Atomen, oder einen Rest -C(=O)-R⁷ bedeutet, wobei R⁷ einen einwertigen linearen oder verzweigten aliphatischen oder einen cycloaliphatischen Kohlenwasserstoffrest mit jeweils 1 bis 12 C-Atomen oder einen einwertigen aromatischen Kohlenwasserstoffrest bedeutet. Das ausgewählte Silan oder gegebenenfalls die ausgewählten Silane können in nicht hydrolysierter Form, in hydrolysierter Form oder in hydrolysierter und teilkondensierter oder hydrolysierter und kondensierter Form oder in einem Gemisch dieser Formen vorliegen.

Weiterhin können im Fall der Miniemulsionspolymerisation gegebenenfalls noch hydrophobe Zusätze in Mengen von bis 3 Gew.-% vorhanden sein (sogenannte "Co-Tenside", "Hydrophobe") bezogen auf das Gesamtgewicht der Komponente A) und der funktionalisierten Komponente B). Im vorliegenden Fall können Siliconpartikel oftmals die Funktion des "Co-Tensids" übernehmen. Weitere Beispiele für Co-Tenside sind Hexadekan, Cetylalkohol, oligomere Cyclosiloxane, wie z.B. Octamethylcyclotetrasiloxan, aber auch pflanzliche Öle wie Rapsöl, Sonnenblumenöl oder Olivenöl. Weiterhin geeignet sind organische oder anorganische Polymere mit einem zahlenmittleren Molekulargewicht von < 10000. Erfindungsgemäß bevorzugte Hydrophobe sind die zu polymerisierenden Silikonpartikel selbst, sowie D3-, D4- und D5-Zyklen und Hexadekan. Besonders bevorzugt sind die zu polymerisierenden Silikonpartikel und Hexadekan.

Die Herstellung der Copolymerisate erfolgt in einem Heterophasenprozess nach den bekannten Techniken der Suspensions-, Emulsions- oder Miniemulsionspolymerisation (vgl. z.B. Peter A. Lovell, M.S. El-Aasser, "Emulsion Polymerization and Emulsion Polymers" 1997, John Wiley and Sons, Chichester). In einer besonders bevorzugten Form wird die Reaktion nach der Methodik der Miniemulsionspolymerisation durchgeführt. Miniemulsionspolymerisationen unterscheiden sich in einigen wesentlichen Punkten, die sie für die Copolymerisation wasserunlöslicher Comonomere besonders geeignet machen von anderen Heterophasenpolymerisationen (vgl. z.B. K. Landfester, "Polyreactions in Miniemulsions", Macromol. Rapid. Commun. 2001, 22, 896-936 und M.S. El-Aasser, E.D. Sudol, "Miniemulsions: Overview of Research and Applications" 2004, JCT Research, 1, 20-31).

Die Reaktionstemperaturen liegen von 0°C bis 100°C, bevorzugt von 5°C bis 80°C, besonders bevorzugt von 30°C bis 70°C. Der pH-Wert des Dispergiermediums liegt zwischen 2 und 9, bevorzugt zwischen 4 und 8. In einer besonders bevorzugten Ausführungsform zwischen 6.5 und 7.5. Die Einstellung des pH-Wertes vor Beginn der Reaktion kann durch Salzsäure oder Natronlauge erfolgen. Die Polymerisation kann diskontinuierlich oder kontinuierlich, unter Vorlage aller oder einzelner Bestandteile des Reaktionsgemisches, unter teilweiser Vorlage und Nachdosierung einzelner Bestandteile des Reaktionsgemisches oder nach dem Dosierverfahren ohne Vorlage durchgeführt werden. Alle Dosierungen erfolgen vorzugsweise im Maße des Verbrauchs der jeweiligen Komponente.

Die Initiierung der Polymerisation erfolgt mittels der üblichen wasserlöslichen Initiatoren oder Redox-Initiator-Kombinationen. Beispiele für Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid und Azobisisobutyronitril. Die genannten Initiatoren werden vorzugsweise in Mengen von 0.01 bis 4.0 Gew.-%, bezogen auf das Gesamtgewicht der Monomeren, eingesetzt. Als Redox-Initiator-Kombinationen verwendet man oben genannte Initiatoren in Verbindung mit einem Reduktionsmittel. Geeignete Reduktionsmittel sind Sulfite und Bisulfite einwertiger Kationen, beispielsweise Natriumsulfit, die Derivate der Sulfoxylsäure wie Zink- oder Alkaliformaldehydsulfoxylate, beispielsweise Natriumhydroxymethansulfinat und Ascorbinsäure. Die Reduktionsmittelmenge beträgt vorzugsweise 0.15 bis 3 Gew.-% der eingesetzten Monomermenge. Zusätzlich können geringe Mengen einer im Polymerisationsmedium löslichen Metallverbindung eingebracht werden, deren Metallkomponente unter den Polymerisationsbedingungen redoxaktiv ist, beispielsweise auf Eisen- oder Vanadiumbasis. Ein besonders bevorzugtes Initiator-System aus den vorangenannten Komponenten ist das System t-Butylhydroperoxid/-Natriumhydroxymethansulfint/Fe(EDTA)^{2+/3+}.

Im Falle der Reaktionsführung nach der Miniemulsionspolymerisationsmethodik können auch überwiegend öllösliche Initiatoren verwendet werden, etwa Cumolhydroperoxid, Isopropylbenzolmonohydroperoxid, Dibenzoylperoxid oder Azobisisobutyronitril. Bevorzugte Starter für Miniemulsionspolymerisationen sind Kaliumpersulfat, Ammoniumpersulfat, Azobisisobutyronitril sowie Dibenzoylperoxid.

Die Ausmaße der Partikeldomänen innerhalb des Copolymers liegen nach erfolgter Copolymerisation vorzugsweise im Bereich von 1 nm bis 1000 nm, insbesondere von 1 nm bis 500 nm und ganz besonders bevorzugt von 1 nm bis 200 nm. Die Ausmaße lassen sich beispielsweise durch Rasterelektronenmikroskopie oder Transmissionselektronenmikroskopie der Polymerdispersionen oder der aus ihnen erhaltenen Polymerfilme bestimmen.

Zur Herstellung von in Wasser redispergierbaren Polymerpulvern werden die wässrigen Dispersionen der erfindungsgemäßen Copolymerisate in dem Fachmann bekannter Weise getrocknet, vorzugsweise nach dem Sprühtrocknungsverfahren.

Die erfindungsgemäßen Copolymerisate in Form deren Dispersionen und Redispersionspulver werden vorzugsweise als Bindemittel zur Herstellung von Beschichtungen verwendet. Sie verfügen über hohe Lagerstabilitäten. Sie verleihen Beschichtungen, in denen sie als Bindemittel eingesetzt werden ausgezeichnete Widerstandsfähigkeit zum Beispiel gegen Bewitterungseinflüsse, Angriff durch chemische Einflüsse und UV Strahlung. Ebenso lassen sich mit diesen Beschichtungen sehr gute Wasserfestigkeit und geringe Verschmutzungsneigung realisieren. Mit hydrophob eingestellten Copolymeren lassen sich zudem poröse Beschichtungen realisieren, mit einer Pigmentvolumenkonzentration über der kritischen Pigmentvolumenkozentration, die sich durch exzellente Gas- und Wasserdampfdurchlässigkeit bei gleichzeitig hoher Wasserabweisung auszeichnen. Durch das Einpolymerisieren von Silanen, die hydrolysierbare und kondensierbare Gruppen enthalten, in das Copolymer, lassen sich Bindemittel herstellen, die nach dem Auftrag feuchtigkeitshärtend sind, so dass sich die Filmhärten, Thermoplastizität und die Verschmutzungsneigung einstellen lassen.

Außer zu diesem Zwecke können die erfindungsgemäßen Copolymerisate in Form deren Dispersionen und Redispersionspulver auch als Zusätze zur Zubereitungen für Beschichtungen oder andere Einsatzzwecke verwendet werden, sowie ohne weitere Zusatzstoffe als reines über Substraten filmbildendes oder zu Blöcken oder anderen beliebigen Formen aushärtendes Material.

Beispiele für Anwendungsfelder, in denen die erfindungsgemäßen. Copolymerisate in Form deren Dispersionen und Redispersionspulver die oben bezeichneten Eigenschaften zu manipulieren gestatten, sind die Herstellung von Beschichtungsstoffen und Imprägnierungen und daraus zu erhaltenden Beschichtungen und Überzügen auf Substraten, wie Metall, Glas, Holz, mineralisches Substrat, Kunst- und Naturfasern zur Herstellung von Textilien, Teppichen, Bodenbelägen, oder sonstigen aus Fasern herstellbaren Gütern, Leder, Kunststoffe wie Folien, Formteilen. Die erfindungsgemäßen Copolymerisate können in flüssiger oder in ausgehärteter fester Form in Elastomermassen eingearbeitet werden. Hierbei können sie zum Zwecke der Verstärkung oder zur Verbesserung anderer Gebrauchseigenschaften verwendet werden, wie der Steuerung der Transparenz, der Hitzebeständigkeit, der Vergilbungsneigung, der Bewitterungsbeständigkeit.

Je nach Anwendung können gegebenenfalls noch ein oder mehrere Zusatzstoffe den Copolymerisaten zugegeben werden. Beispiele hierfür sind Lösemittel oder Filmbildehilfsmittel; Gemische aus mindestens zwei organischen Lösemitteln; Pigmentnetz- und Dispergiermittel; oberflächeneffektgebende Additive, wie zum Beipiel solche, die zur Erzielung von Texturen wie der Hammerschlagtextur oder der Orangenhaut verwendet werden; Antischaummittel; Substratnetzmittel; Oberflächenverlaufsmittel; Haftvermittler; Trennmittel; weiteres organisches Polymer, das nicht identisch ist mit dem organischen Polymer (A); Tensid; hydrophober Hilfsstoff; ein nicht radikalisch polymerisierbares Siliconharz.

Durch Funktionalisierung von Partikeln mit olefinischen Gruppen lassen sich supervernetzende Bausteine erzeugen, welche als multifunktionelle Monomere bei der Copolymerisation mit ethylenisch ungesättigten Verbindungen fungieren können. Die Polymerisation kann im wässrigen Medium mit einer Emulsionspolymerisation durchgeführt werden und führt zu stabilen, hydrophob modifizierten Copolymerdispersionen. Es resultieren auf diese Weise je nach Funktionalisierungsgrad der Partikel schwach bis stark vernetzte Hybridpolymere. Diese zeichnen sich dadurch aus, dass die funktionalisierten Partikel an das organische Polymer über jeweils wenigstens eine C-C-Bindung gebunden sind und im Vergleich zu Systemen, die nur lineare, schwach vernetzende Einheiten aufweisen, zusätzlich einen erhöhten mechanischen Widerstand zeigen.

Im Vergleich zu Systemen, die nur durch Bildung von M-O-M (M = Metall), Si-O-Si, oder M-O-Si-Bindungen vernetzen, weisen die erfindungsgemäßen partikelhaltigen Dispersionen und Redispersionspulver aufgrund der C-C-Knüpfung außerdem eine erhöhte Umwelt- und Chemikalienresistenz auf, beispielsweise gegenüber stark saurem oder alkalischem Milieu.

Diese Resistenz kann noch gesteigert werden, wenn durch zusätzliche Anwesenheit von Silanol- und/oder Alkoxygruppen auf der Partikeloberfläche neben der Anknüpfung des Partikels an die organische Matrix über C-C-Bindungsbildung eine zusätzliche Vernetzung zwischen den Partikeln durch M-O-Si-O-Si-M erfolgen kann. Werden durch Zusatz von radikalisch polymerisierbaren Silanen zusätzlich Alkoxysilyl- und/oder Silanolfunktionen in die Polymerseitenketten eingebaut, so kann eine zusätzliche Nachvernetzung auch durch Si-O-Si-Bindungsbildung zwischen Partikel und Seitenkette oder zwischen Seitenkette und Seitenkette erfolgen.

Am meisten bevorzugt wird die Verwendung der nanopartikelhaltigen Organocopolymere in Baustoffbeschichtungsmitteln. Unter dem Begriff Baustoffbeschichtungsmittel werden dabei Farben verstanden, die sowohl für die Anwendung unmittelbar am Gebäude sowohl innen als auch außen gedacht sind, als auch solche, die auf den Anlagen zu Gebäuden wie etwa Außenanlagen gegebenenfalls im weiteren Sinne aufgebracht werden, das heißt bei Außenanlagen etwa auf Verandas, Terassen, Außengeländern und auf Grundstückseingrenzungen oder Umzäunungen, auch auf Weidezäunen aufgebracht werden. Auch die Beschichtung von unverbauten Baustoffen, wie Ziegeln, Kalksandsteinen oder Betonsteinen ist eingeschlossen. Solche Beschichtungen können porös oder filmbildend sein. Die meistverbreiteten Substrate sind mineralischer Natur und Holz. Daneben sind beispielsweise. Metall und Kunststoffe als Substrate einsetzbar.

Das nanopartikelhaltige Organocopolymer wirkt in dem Baustoffbeschichtungsmittel als Bindemittel. Dabei beobachtet man eine synergistische Verstärkung der Eigenschaften des organischen Polymers und des siliciumbasierenden Anteils. Das heißt man findet typischerweise neben hohem Bindevermögen und der hochwertiger mechanischer Eigenschaften des Polymers, die Beständigkeitseigenschaften des Siliciumteils. Insbesondere zeichnen sich diese Baustoffbeschichtungsmittel dadurch aus, dass sie Beschichtungen mit signifikant verbessertem Antiblockverhalten und damit verringerter Verschmutzungsneigung ergeben. Die bei nur physikalisch gemischten nanopartikelhaltigen Baustoffbeschichtungen möglichen Unverträglichkeiten, inhomogenen Verteilungen oder nachträgliche Phasentrennung und Domänenbildung treten dabei bei Verwendung der erfindungsgemäßen nanopartikelhaltigen Organocopolymerdispersionsbindemittel nicht auf. Des weiteren werden die zu erwartenden Eigenschaften, wie hohe Lagerungs- und Bewitterungsstabilität und sehr guter Wasserfestigkeit gefunden. Mit hydrophob eingestellten Copolymeren können poröse Beschichtungen realisiert werden, mit einer Pigmentvolumenkonzentration über der kritischen Pigmentvolumenkozentration, die sich durch hohe Gas- und Wasserdampfdurchlässigkeit bei gleichzeitig hoher Wasserabweisung auszeichnen. Durch das Einpolymerisieren von Silanen, die hydrolysierbare und kondensierbare Gruppen enthalten, in das Copolymer, lassen sich Bindemittel herstellen, die nach dem Auftrag feuchtigkeitshärtend sind, so dass sich die Filmhärten, Thermoplastizität und die Verschmutzungsneigung einstellen lassen. Die Baubeschichtungsstoffe werden vorzugsweise auf Substraten aus mineralischen Stoffen und auf Holz eingesetzt.

Die Baustoffbeschichtungsmittel können noch Hilfsstoffe enthalten:

Beispiele für Hilfsstoffe sind Tenside (C), wobei sowohl anionische Tenside, als auch nichtionische Tenside, oder kationische Tenside, oder ampholytische Tenside geeignet sind.

Weitere Hilfsstoffe sind Pigmente (D), beispielsweise Erdpigmente, wie Kreide, Ocker, Umbra, Grünerde, Mineralpigmente, wie Titandioxid, Chromgelb, Mennige, Zinkgelb, Zinkgrün, Cadmiumrot, Kobaltblau, organische Pigmente, wie Sepia, Kasseler Braun, Indigo, Azo-Pigmente, Antrachinoide-, Indigoide-, Dioxazin-, Chinacridon-, Phthalocyanin-, Isoindolinon- und Alkaliblau-Pigmente.

Die Baustoffbeschichtungsmittel können noch Zusatzstoffe (E) enthalten. Zusatzstoffe (E) sind beispielsweise Biozide, Verdicker, Alkylorthotitanate, Alkylborsäureester, Pigmentnetz-und Dispergiermittel, Antischaummittel, Korrosionsschutzpigmente, weitere Metalloxide, die nicht identisch ist mit dem Pigment (D) sind und keine Korrosionsschutzpigmente sind, Metallcarbonate und organische Harze.

Die erfindungsgemäßen nanopartikelhaltigen Organocopolymerdispersionen können während dem Vorgang der Herstellung der Baustoffbeschichtungsmittel im Verlaufe unterschiedlicher Prozessschritte zugesetzt werden. Sie können zum Beispiel dem Mahlgut zugegeben werden, wie es typisch für Siliconharzbindemittel ist, oder sie werden während des Auflackvorganges zugesetzt, wie es eher typisch ist für Dispersionen organischer Polymerer.

Die Baustoffbeschichtungsmittel enthalten vorzugsweise 1 bis 90 Gew.-%, besonders bevorzugt 4 bis 70 Gew.-% der nanopartikelhaltigen Organocopolymerdispersionen.
Die Baustoffbeschichtungsmittel enthalten vorzugsweise 0,1 bis 10 Gew.-%, besonders bevorzugt 0,5 bis 5 Gew.-% Tensid (C).
Die Baustoffbeschichtungsmittel enthalten vorzugsweise 0,5 bis 40 Gew.-%, besonders bevorzugt 2 bis 35 Gew.-%, insbesondere 5 bis 30 Gew.-% Pigment (D).
Die Baustoffbeschichtungsmittel enthalten vorzugsweise 10 bis 70. Gew.-%, besonders bevorzugt 15 bis 65 Gew.-%, insbesondere 20 bis 60 Gew.-% Wasser.
Die Baustoffbeschichtungsmittel enthalten vorzugsweise 0,1 bis 60 Gew.-%, besonders bevorzugt 1 bis 50 Gew.-%, insbesondere 10 bis 40 Gew.-% Zusatzstoffe (E).
Die Anteile in Gew.-% sind dabei jeweils auf das Gesamtgewicht des Baustoffbeschichtungsmittels bezogen.

### Beispiele:

### Beispiele zur Herstellung methacrylfunktioneller Partikel:

### Siliconharze: Methode 1 - Equilibrierung

Nach gängigem Verfahren wurde die toluolische Lösung eines Organopolysiloxanharzes und eines α-Methacrylatomethylsilans (z.B. Methacrylatomethyl-dimethylmethoxysilan, Methacrylatomethyl-methyldimethoxysilan, Methacrylatomethyl-trimethoxysilan) in Gegenwart eines sauren Katalysators wie z.B. p-Toluolsulfonäure oder eines sauren Schichtsilikats, wie es z.B. unter dem Markennamen Tonsil® Optimum FF von der Firma Süd-Chemie erhältlich ist, umgesetzt. Nach Filtration bzw. Neutralisation des Katalysators wurde das Lösungsmittel abgedampft.

### Siliconharze: Methode 2 - Cohydrolyse

Nach gängigem Verfahren wurde ein Gemisch aus Hexamethyldisiloxan, einem α-Methacrylatomethylsilan (z.B. Methacrylatomethyl-dimethylmethoxysilan, Methacrylatomethyl-methyldimethoxysilan, Methacrylatomethyl-trimethoxysilan) und Tetraethoxysilan in Gegenwart von wässriger HCl hydrolysiert. Nach Zugabe von Toluol, Neutralisation mit NaOH und Abfiltrieren des ausgefallenen NaCl wurde das Lösungsmittel abgedampft.

### SiO₂-Partikel - Variante 1:

Zu 20 g eines SiO₂-Organosols (IPA-ST® der Firma Nissan Chemicals, 30 Gew.-% SiO₂, 12 nm) wurden innerhalb von 1 min 2 g Methacrylatomethyl-dimethylmethoxysilan getropft und das Gemisch für 16 h auf 60°C erwärmt. Nach Abkühlen des Gemischs auf Raumtemperatur wurden 15 g Butylacrylat zugegeben und anschliessend das Isopropanol unter vermindertem Druck abdestilliert. Die transparente Dispersion enthielt 29 Gew.-% SiO₂.

### SiO₂-Partikel - Variante 2:

Zu 20 g eines wässrigen SiO₂-Sols (LUDOX® AS 40 der Firma Grace Davison, 40 Gew.-% SiO₂, pH = 9,1, 22 nm) wurden innerhalb von 60 min 20 ml Ethanol und binnen 5 min 2 g Methacrylatomethyl-trimethoxysilan getropft und das Gemisch für 16 h auf 60 °C erwärmt. Nach Abkühlen des Gemischs auf Raumtemperatur wurden 15 g Styrol zugegeben und anschliessend Ethanol und Wasser als A-zeotrop abdestilliert. Die transparente Dispersion enthielt 35 Gew.-% SiO₂.

Im Folgenden wird die Herstellung der erfindungsgemäßen Dispersionen beschrieben. Alle Reaktionen erfolgten unter Stickstoffatmosphäre bei Normaldruck.

**Folgende Partikel kamen zum Einsatz:**

| Name | Silan (α-Si) | Partikel (B) | (α-Si/B) |
|---|---|---|---|
| Partikel 1 | α-Methacryloxymethyldimethylmonomethoxysilan | Methylsiliconharz (D/T =3/97); Rest-OR: 4.8 % | 1/10 |
| Partikel 2 | α-Methacryloxymethyldimethylmonomethoxysilan | Methylsiliconharz (M/Q=39/61); Rest-OR: 3.4 % | 1/10 |
| Partikel 3 | α-Methacryloxymethyldimethylmonomethoxysilan | nano-SiO₂ Partikelgröße 5-20 nm | 1/10 |
| Partikel 4 | α-Methacryloxymethyldimethylmonomethoxysilan | fumed silica WACKER HDK T30 | 1/10 |
| Partikel 5 | α-Methacryloxymethyl-dimethylmonomethoxysilan | Phenylsiliconharz (D/T=37/63) | 1/10 |
| Partikel 6 | α-Methacryloxymethyldimethyltrimethoxysilan | Methylsiliconharz (M/Q=39/61); Rest-OR: 3.4 % | 1/10 |
| Partikel 7 | Vinyldimethylmethoxysilan | SILRES® H62A | 1/10 |
| Partikel 8 | α-Methacryloxydimethyltrimethoxysilan | Methylsiliconharz (M/Q=39/61); Rest-OR: 3.4 % | 1/20 |

### Beispiele zur Herstellung der Copolymerisate mittels Emulsionspolymerisation:

### Beispiel 1 (20 Gew.-% Partikel 1; Styrol/n-Butylacrylat 1/2):

In einem 1000 ml-Polymerisationsgefäß mit Ankerrührer wurden
7.2 g n-Butylacrylat
3.8 g Styrol
93.7 g Wasser
1.2 g Acrylsäure
0.4 g Natriumdodecylsulfat
0.1 g Natriumvinylsulfonat
je 10 mg Eisen(II)-sulfät und EDTA-Dinatriumsalz auf einen pH-Wert von 6.5 eingestellt und unter Rühren (200 rpm) auf 40°C erhitzt (Vorlage).
In einem ersten Gefäß (Zulauf 1a) wurde eine 10 Gew.-%-ige Lösung von tert.-Butylhydroperoxid in Wasser hergestellt.
In einem zweiten Gefäß (Zulauf 1b) wurde eine 5 Gew.-%-ige Lösung von Natriumhydroxymethansulfinat in Wasser hergestellt.
In einem dritten Gefäß (Zulauf 2) wurde eine Emulsion aus
190.3 g Wasser
3.6 g Acrylsäure
24.0 g Partikel 1
13.3 g Natriumdodecylsulfat
65.5 g n-Butylacrylat
34.3 g Styrol
hergestellt.
Dabei wurde zunächst Partikel 1 im organischen Monomer vollständig gelöst und anschließend emulgiert.
Zulauf 1a und 1b wurden mit einer Dosiergeschwindigkeit von 105 µl/min gestartet und die Vorlage 20 Minuten bei 40°C polymerisiert. Anschließend wurde Zulauf 2 mit einer Dosiergeschwindigkeit von 4 ml/min gestartet und die Monomeremulsion innerhalb 165 min kontinuierlich zudosiert. Nach dem Ende der Dosierung (Zulauf 2) wurde die TBHP- und Brüggolitdosierung noch 1 Stunde fortgesetzt. Dann wurde auf Raumtemperatur abgekühlt. Dispersionsanalyse:
Feststoffgehalt: 32 %, pH-Wert: 6.5; Brookfield-Viskosität 20 (Spindel 4): 1740 mPas; Glasübergangstemperatur Tg: 54°C; (Nanosizer) Coulter: mittlere Teilchengröße: 135/77 nm; PDI: 1.45; Oberfläche 58.7 m²/g; Verfilmung des Polymers: nach Abtrocknen durch Verdunsten des Wassers: schmier- und klebfreier Film, kein Ausschwitzen von Silicon; Dispersionsfilm hat elastische Eigenschaften. TEM-Aufnahmen (Ultramikrotom-Schnitt) des Films zeigen eine homogene Veteilung des Silicons in der Matrix mit Silicondomänen in den Größenordnungen 50 - 400 nm.

In analoger Weise wurden aus den folgenden Rezepturen folgende Copolymerdispersionen hergestellt, welche folgende analytischen Daten aufwiesen:

### Beispiel 2 (10 Gew.-% Partikel 1; Styrol/n-Butylacrylat 1/2):

| Vorlage | |
|---|---|
| 7.2 g n-Butylacrylat | 3.8 g Styrol |
| 93.7 g Wasser | 1.2 g Acrylsäure |
| 0.4 g Natriumdodecylsulfat | 0.1 g Natriumvinylsulfonat |
| je 10 mg Eisen(II)-sulfat und | |
| EDTA | |
| Zulauf 1a | Zulauf 1b |
| 10 % Lsg. tert-Butyl- | 5 % Lsg. Natriumhydroxymethan- |
| Hydroperoxid in H₂O | sulfinat in H₂O |
| Zulauf 2 | |
| 190.3 g Wasser | 3.6 g Acrylsäure |
| 22.3 g Partikel 1 | 13.3 g Natriumdodecylsulfat |
| 65.5 g n-Butylacrylat | 34.3 g Styrol |

Feststoffgehalt: 29 %, pH-Wert: 7.1; Brookfield-Viskosität 26: 0.0038 Pas; (Nanosizer) Coulter: mittlere Teilchengröße: 270 nm; PDI: 3.2; Oberfläche 55.29 m²/g; Verfilmung des Polymers: nach Abtrocknen durch Verdunsten des Wassers: schmier- und klebfreier Film, kein Ausschwitzen von Silicon

### Beispiel 3 (10 Gew.-% Partikel 1; MMA/n-Butylacrylat 1/1):

| Vorlage | |
|---|---|
| 16.6 g n-Butylacrylat | 16.6 g Methylmethacrylat |
| 102.3 g Wasser | 1.8 g Acrylsäure |
| 0.4 g Natriumdodecylsulfat | 0.16 g Natriumvinylsulfonat |
| je 10 mg Fe(II)-sulfat u. EDTA | |
| Zulauf 1a | Zulauf 1b |
| 10 % Lsg. tert-Butyl- | 5 % Lsg. Natriumhydroxymethan- |
| Hydroperoxid in H₂O | sulfinat in H₂O |
| Zulauf 2 | |
| 207.7 g Wasser | 5.5 g Acrylsäure |
| 38.0 g Partikel 1 | 13.6 g Natriumdodecylsulfat |
| 149.9 g n-Butylacrylat | 149.9 g Methylmethacrylat |

Feststoffgehalt: 45 %, pH-Wert: 7.5; Brookfield-Viskosität 41: 0.0037 Pas; Glasübergangstemperatur Tg: 52°C; (Nanosizer) Coulter: mittlere Teilchengröße: 270/80 nm (bimod.); Oberfläche 49.74 m²/g; Verfilmung des Polymers: nach Abtrocknen durch Verdunsten des Wassers: schmier- und klebfreier Film, kein Ausschwitzen von Silicon.

### Beispiel 4 (10 Gew.-% Partikel 2, MMA/n-Butylacrylat 1/1):

| Vorlage | |
|---|---|
| 16.6 g MMA | 16.6 g n-Butylacrylat |
| 92.4 g Wasser | 1.8 g Acrylsäure |
| 0.4 g Natriumdodecylsulfat | 0.16 g Natriumvinylsulfonat |
| je 10 mg Fe(II)-sulfat u. EDTA | |
| Zulauf 1a | Zulauf 1b |
| 10 % Lsg. tert-Butyl- | 5 % Lsg. Natriumhydroxymethan- |
| Hydroperoxid in H₂O | sulfinat in H₂O |
| Zulauf 2 | |
| 187.6 g Wasser | 5.5 g Acrylsäure |
| 13.3 g Natriumdodecylsulfat | 38.0 g Partikel 2 |
| 149.9 g n-Butylacrylat | 149.9 g MMA |

Feststoffgehalt: 50.8 %, pH-Wert: 8.1; Brookfield-Viskosität 48: 0,103 Pas; Glasübergangstemperatur T_{g}: 54°C; (Nanosizer) Coulter: mittlere Teilchengröße: 285 nm; PDI: 1,2; Oberfläche 22.43 m²/g; Verfilmung des Polymers: nach Abtrocknen durch Verdunsten des Wassers: schmier- und klebfreier Film, kein Ausschwitzen von Silicon.TEM-Aufnahmen: Si-Partikel Domänen im Bereich 50 - 700 nm.

### Beispiel 5 (20 Gew.-% Partikel 2; MMA/n-Butylacrylat 1/1):

| Vorlage | |
|---|---|
| 16.6 g MMA | 16.6 g n-Butylacrylat |
| 92.4 g Wasser | 1.8 g Acrylsäure |
| 0.4 g Natriumdodecylsulfat | 0.16 g Natriumvinylsulfonat |
| je 10 mg Fe(II)-sulfat u. EDTA | |
| Zulauf 1a | Zulauf 1b |
| 10 % Lsg. tert-Butyl- | 5 % Lsg. Natriumhydroxymethan- |
| Hydroperoxid in H₂O | sulfinat in H₂O |
| Zulauf 2 | |
| 187.6 g Wasser | 5.5 g Acrylsäure |
| 13.3 g Natriumdodecylsulfat | 76.0 g Partikel 2 |
| 149.9 g n-Butylacrylat | 149.9 g MMA |

Feststoffgehalt: 49 %, pH-Wert: 7.9; Brookfield-Viskosität 45: 0.049 Pas; Glasübergangstemperatur T_{g}: 53°C; (Nanosizer) Coulter: mittlere Teilchengröße: 262 nm; PDI: 1.1; Oberfläche 26.07 m²/g; Verfilmung des Polymers: nach Abtrocknen durch Verdunsten des Wassers: schmier- und klebfreier Film, kein Ausschwitzen von Silicon. TEM-Aufnahmen: Si-Partikel Domänen im Bereich 50-700 nm.

### Beispiel 6 (30 Gew.-% Partikel 2, MMA/n-Butylacrylat 1/1)

| Vorlage | |
|---|---|
| 10 g MMA | 10 g n-Butylacrylat |
| 82.4 g Wasser | 1.4 g Acrylsäure |
| 0.2 g Natriumdodecylsulfat | 0.12 g Natriumvinylsulfonat |
| je 10 mg Fe(II)-sulfat u. EDTA | |
| Zulauf 1a | Zulauf 1b |
| 10 % Lsg. tert-Butyl- | 5 % Lsg. Natriumhydroxymethan- |
| Hydroperoxid in H₂O | sulfinat in H₂O |
| Zulauf 2 | |
| 167.5 g Wasser | 4.1 g Acrylsäure |
| 8.2 g Natriumdodecylsulfat | 85.0 g Partikel 2 |
| 89.6 g n-Butylacrylat | 89.6 g MMA |

Feststoffgehalt: 48 %, pH-Wert: 7.7; Brookfield-Viskosität 48: 0.103 Pas; Glasübergangstemperatur Tg: 54°C; (Nanosizer) Coulter: mittlere Teilchengröße: 346 nm; Oberfläche 30.13 m²/g; Verfilmung des Polymers: nach Abtrocknen durch Verdunsten des Wassers: schmier- und klebfreier Film, kein Ausschwitzen von Silicon. TEM-Aufnahmen: Si-Partikel Domänen im Bereich 50 - 700 nm.

### Beispiel 7 (10 Gew.-% Partikel 3, MMA/n-Butylacrylat 1/1)

| Vorlage | |
|---|---|
| 16.6 g MMA | 16.6 g n-Butylacrylat |
| 102.3 g Wasser | 2.0 g Acrylsäure |
| 0.4 g Natriumdodecylsulfat | 0.16 g Natriumvinylsulfonat |
| je 10 mg Fe(II)-sulfat u. EDTA | |
| Zulauf 1a | Zulauf 1b |
| 10 % Lsg. tert-Butyl- | 5 % Lsg. Natriumhydroxymethan- |
| Hydroperoxid in H₂O | sulfinat in H₂O |
| Zulauf 2 | |
| 207.7 g Wasser | 5.9 g Acrylsäure |
| 13.6 g Natriumdodecylsulfat | 38.0 g Partikel 3 |
| 149.4 g n-Butylacrylat | 149.4 g MMA |

Feststoffgehalt: 46 %, pH-Wert: 8.1; Brookfield-Viskosität 46: 0.116 Pas; Glasübergangstemperatur T_{g}: 54°C; (Nanosizer) Coulter: mittlere Teilchengröße: 150 nm; Oberfläche 42.49 m²/g; Verfilmung des Polymers: nach Abtrocknen durch Verdunsten des Wassers: schmier- und klebfreier Film, kein Ausschwitzen von Silicon. TEM-Aufnahmen: nano-SiO₂ bleibt in seiner Identität erhalten.

### Beispiel 8 (5 Ges.-% Partikel 4, MMA/n-Butylacrylat 1/1)

Hier wurde das gesamte Material vorgelegt und nur die Inititatorlösungen zudosiert.

| Vorlage | |
|---|---|
| 109.2 g MMA | 109.2 g n-Butylacrylat |
| 580 g Wasser | 8,0 g Acrylsäure |
| 16 g Natriumdodecylsulfat | 0.12 g Natriumvinylsulfonat |
| je 10 mg Fe(II)-sulfat u. EDTA | 11.3 g Partikel 4 |
| Zulauf 1a | Zulauf 1b |
| 10 % Lsg. tert-Butyl- | 5 % Lsg. Natriumhydroxymethan- |
| Hydroperoxid in H₂O | sulfinat in H₂O |

Feststoffgehalt: 26 %, pH-Wert: 8.1; Brookfield-Viskosität 44: 0.0075 Pas; (Nanosizer) Coulter: mittlere Teilchengröße: 106 nm, 1 µm (bimod.); Oberfläche 374 m²/g; Verfilmung des Polymers: nach Abtrocknen durch Verdunsten des Wassers: klebfreier Film, stippiges Bereiche zu erkennen.

### Beispiel 9 (10 Gew.-% Partikel 5, MMA/n-Butylacrylat 1/1)

| Vorlage | |
|---|---|
| 13.3 g MMA | 13.3 g n-Butylacrylat |
| 85.8 g Wasser | 1.5 g Acrylsäure |
| 0.3 g Natriumdodecylsulfat | 0.12 g Natriumvinylsulfonat |
| je 10 mg Fe(II)-sulfat u. EDTA | |
| Zulauf 1a | Zulauf 1b |
| 10 % Lsg. tert-Butyl- | 5 % Lsg. Natriumhydroxymethan- |
| Hydroperoxid in H₂O | sulfinat in H₂O |
| Zulauf 2 | |
| 174.2 g Wasser | 4.5 g Acrylsäure |
| 10.7 g Natriumdodecylsulfat | 29.6 g Partikel 5 |
| 119.7 g n-Butylacrylat | 119.7 g MMA |

Feststoffgehalt: 47 %, pH-Wert: 7.5; Brookfield-Viskosität 18: 0.056 Pas; Glasübergangstemperatur T_{g}: 49°C; (Nanosizer) Coulter: mittlere Teilchengröße: 108 nm, 400 nm, 4 µm (trimod.); Oberfläche 27.23 m²/g; Verfilmung des Polymers: nach Abtrocknen durch Verdunsten des Wassers: klebfreier Film.

### Beispiel 10 (20 Gew.-% Partikel 5, MMA/n-Butylacrylat 1/1)

| Vorlage | |
|---|---|
| 8.0 g MMA | 8.0 g n-Butylacrylat |
| 57.4 g Wasser | 0.9 g Acrylsäure |
| 0.2 g Natriumdodecylsulfat | 0.07 g Natriumvinylsulfonat |
| je 10 mg Fe(II)-sulfat u. EDTA | |
| Zulauf 1a | Zulauf 1b |
| 10 % Lsg. tert-Butyl- | 5 % Lsg. Natriumhydroxymethan- |
| Hydroperoxid in H₂O | sulfinat in H₂O |
| Zulauf 2 | |
| 116.6 g Wasser | 2.7 g Acrylsäure |
| 10.7 g Natriumdodecylsulfat | 39.9 g Partikel 5 |
| 72 g n-Butylacrylat | 72 g MMA |

Feststoffgehalt: 46 %, pH-Wert: 7.8; Brookfield-Viskosität 38: 0.0105 Pas; Glasübergangstemperatur T_{g}: 4.8°C; (Nanosizer) Coulter: mittlere Teilchengröße: 240 nm, 6 µm (bimod.); Oberfläche 27.23 m²/g; Verfilmung des Polymers: nach Abtrocknen durch Verdunsten des Wassers: klebfreier Film.

### Beispiel 11 (10 Gew.-% Partikel 6, MMA/n-Butylacrylat 1/1)

| Vorlage | |
|---|---|
| 11.6 g MMA | 11.6 g n-Butylacrylat |
| 67.7 g Wasser | 1.3 g Acrylsäure |
| 0.3 g Natriumdodecylsulfat | 0.10 g Natriumvinylsulfonat |
| je 10 mg Fe(II)-sulfat u. EDTA | |
| Zulauf 1a | Zulauf 1b |
| 10 % Lsg. tert-Butyl- | 5 % Lsg. Natriumhydroxymethan- |
| Hydroperoxid in H₂O | sulfinat in H₂O |
| Zulauf 2 | |
| 137.4 g Wasser | 3.8 g Acrylsäure |
| 9.5 g Natriumdodecylsulfat | 12.7 g Partikel 6 |
| 104.6 g n-Butylacrylat | 104.6 g MMA |

Feststoffgehalt: 45 %, pH-Wert: 8.0; Brookfield-Viskosität 18: 0.0326 Pas; (Nanosizer) Coulter: mittlere Teilchengröße: 360 nm, Oberfläche 17.41 m²/g; Verfilmung des Polymers: nach Abtrocknen durch Verdunsten des Wassers: klebfreier Film.

Beispiele zur Herstellung der Copolymerisate mittels Miniemulsionspolymerisation:

### Beispiel 12 (9 % Partikel 1, n-Butylacrylat/Styrol 1/1):

In zwei getrennten Gefäßen werden
10.0 g n-Butylacrylat,
10 g Styrol,
600 mg Hexadecan,
und 1 g Partikel 1
sowie
160 g entionisiertes Wasser
1000 mg SDS
400 mg Kaliumperoxodisulfat
gelöst und anschließend vereinigt. Unter Rühren und Eiskühlung wird die Emulsion 20 Minuten mit Ultraschall behandelt. Anschließend wird die entstandene Miniemulsion bei 80°C in einem 500 ml-Polymerisationsreaktor für 4 h polymerisiert.

Feststoffgehalt: 12 %, pH-Wert: 7.2; Coulter: mittlere Teilchengröße: 62 nm, Oberfläche 98.67 m²/g; Verfilmung des Polymers: nach Abtrocknen durch Verdunsten des Wassers: klebfreier Film.

**In analoger Weise wurden folgende Dispersionen hergestellt:**

### Beispiel 13 (10 % Partikel 2, MMA/n-Butylacrylat 1/1)

| Rezept | |
|---|---|
| 10 g MMA | 10 g n-Butylacrylat |
| 160 g Wasser | 2 g Partikel 2 |
| 1000 mg Natriumdodecylsulfat | 1000 mg Hexadecan |
| 400 mg Kaliumperoxodisulfat | |

Feststoffgehalt: 12 %, pH-Wert: 7.2; Coulter: mittlere Teilchengröße: 64 nm, Oberfläche 86.65 m²/g; Verfilmung des Polymers: nach Abtrocknen durch Verdunsten des Wassers: klebfreier Film.

### Beispiel 14 (20 % Partikel 2, MMA/n-Butylacrylat 1/1)

| Rezept | |
|---|---|
| 10 g MMA | 10 g n-Butylacrylat |
| 160 g Wasser | 5 g Partikel 2 |
| 1000 mg Natriumdodecylsulfat | 1000 mg Hexadecan |
| 400 mg Kaliumperoxodisulfat | |

Feststoffgehalt: 14 %, pH-Wert: 7.4; Coulter: mittlere Teilchengröße: 71 nm, Oberfläche 87.61 m²/g; Verfilmung des Polymers: nach Abtrocknen durch Verdunsten des Wassers: klebfreier Film.

### Beispiel 15 (30 % Partikel 2, MMA/n-Butylacrylat 1/1)

| Rezept | |
|---|---|
| 10 g MMA | 10 g n-Butylacrylat |
| 160 g Wasser | 8 g Partikel 2 |
| 1000 mg Natriumdodecylsulfat | 1000 mg Hexadecan |
| 400 mg Kaliumperoxodisulfat | |

Feststoffgehalt: 15 %, pH-Wert: 7.2; Coulter: mittlere Teilchengröße: 80 nm / 1 µm (bimodal), Oberfläche 60.13 m²/g; Verfilmung des Polymers: nach Abtrocknen durch Verdunsten des Wassers: klebfreier Film.

### Beispiel 16 (10 % Partikel 3, MMA/n-Butylacrylat 1/1)

| Rezept | |
|---|---|
| 10 g MMA | 10 g n-Butylacrylat |
| 160 g Wasser | 2 g Partikel 3 |
| 1000 mg Natriumdodecylsulfat | 1000 mg Hexadecan |
| 400 mg Kaliumperoxodisulfat | |

Feststoffgehalt: 12 %, pH-Wert: 7.1; Coulter: mittlere Teilchengröße: 67 nm, Oberfläche 92.58 m²/g; Verfilmung des Polymers: nach Abtrocknen durch Verdunsten des Wassers: klebfreier Film.

### Beispiel 17 (10 % Partikel 1, MMA/n-Butylacrylat 1/1)

| Rezept | |
|---|---|
| 10 g MMA | 10 g n-Butylacrylat |
| 160 g Wasser | 2 g Partikel 1 |
| 3000 mg 20 % PVOH-Lsg. | 1000 mg Hexadecan |
| Hydrolysegrad 88-Mol-%, | |
| Höppler-Viskosität 4 mPas | |
| 400 mg Kaliumperoxodisulfat | |

Feststoffgehalt: 12 %, pH-Wert: 7.1; Coulter: mittlere Teilchengröße: 86 nm / > 1 µm (multimodal), Oberfläche 13.24 m²/g; Verfilmung des Polymers: nach Abtrocknen durch Verdunsten des Wassers: klebfreier Film.

### Beispiel 18 (20 % Partikel 1, MMA/n-Butylacrylat 1/1)

| Rezept | |
|---|---|
| 10 g MMA | 10 g n-Butylacrylat |
| 160 g Wasser | 5 g Partikel 1 |
| 1000 mg Natriumdodecylsulfat | 1000 mg Hexadecan |
| 400 mg Kaliumperoxodisulfat | |

Feststoffgehalt: 14 %, pH-Wert: 7.2; Coulter: mittlere Teilchengröße: 70 nm, Oberfläche 88.69 m²/g; Verfilmung des Polymers: nach Abtrocknen durch Verdunsten des Wassers: klebfreier Film. TEM-Aufnahmen des Films (Ultramikrotom-Schnitt): Si-Domänen in der Größenordnung 10 - 50 nm.

### Beispiel 19 (10 % Partikel 2, 1 % Partikel 4, MMA/n-Butylacrylat/Styrol 1/1/0.1)

| Komponente | Masse [g] |
|---|---|
| Wasser | 303.00 |
| SDS | 15.00 |
| NaVinylsulfonat | 1.00 |
| Acrylsäure | 1.00 |
| Butylacrylat | 40.00 |
| MMA | 40.00 |
| Styrol | 4.00 |
| Partikel 4 | 2.00 |
| Partikel 2 | 10.00 |
| Hexadekan | 1.00 |
| Kaliumpersulfat | 1.25 |
| (Wasser) | |

Feststoffgehalt: 29 %, pH-Wert: 2.6; Verfilmung des Polymers: nach Abtrocknen durch Verdunsten des Wassers: klebfreier Film.

### Beispiel 20 (10 % Partikel 6, MMA/n-Butylacrylat/Styrol 2/3/0.22)

| Komponente | Masse [g] |
|---|---|
| Wasser | 165.90 |
| SDS | 5.00 |
| NaVinylsulfonat | 0.30 |
| Acrylsäure | 0.20 |
| Butylacrylat | 90.00 |
| MMA | 62.00 |
| Styrol | 10.00 |
| Partikel 6 | 18.00 |
| Hexadekan | 3.25 |
| Kaliumpersulfat | 0.80 |
| NaHCO₃ (Wasser) | 0.25 |

Feststoffgehalt: 49 %, pH-Wert: 4.5; Verfilmung des Polymers: nach Abtrocknen durch Verdunsten des Wassers: klebfreier Film.

### Beispiel 21 (10 % Partikel 3, MMA/n-Butylacrylat/Styrol 2/3/0.22)

| Komponente | Masse [g] |
|---|---|
| Wasser | 165.90 |
| SDS | 5.00 |
| NaVinylsulfonat | 0.30 |
| Acrylsäure | 0.20 |
| Butylacrylat | 90.00 (44 g |
| | aus Sol) |
| MMA | 62.00 |
| Styrol | 10.00 |
| Partikel 3 (29 | 18.00 |
| % in BA) | (62 g Sol) |
| Hexadekan | 3.25 |
| Kaliumpersulfat | 0.80 |
| NaHCO₃ (Wasser) | 0.25 |

Feststoffgehalt: 49 %, pH-Wert: 4.5; Verfilmung des Polymers: nach Abtrocknen durch Verdunsten des Wassers: transparenter, klebfreier Film.

Beispiele zur Herstellung der Copolymerisate mittels Suspensionspolymerisation:

### Vergleichsbeispiel 22 (40 % Partikel 7, Vinylacetat)

In einem 20 Liter Druckautoklaven wurden 1.17 kg Wasser, 2.78 kg Polyviol W 25/140 (Polyvinylalkohol, 10 Gew.-%-ige Lösung), 47.25 g Genapol X 050 (100 Gew.-%-ig), 120.28 g Texapon K12 (10 Gew.-%-ige wässrige Lösung), 4.36 g Natriumacetat, 555.83 g Vinylacetat, 2220 g Partikel 7 und 58.51 g Trigonox 23 (Tertiärbutylperoxyneodecanoat, TBPND, 95 Gew.-%-ig in Aliphaten - öllöslicher Initiator) vorgelegt. Mit 10 Gew.-%-iger Ameisensäure wurde auf pH = 5 eingestellt. Ferner wurden 10 ml Trilon B (ED-TA; 2 Gew.-%-ige wässrige Lösung) und 31 ml Eisenammonsulfat (1 Gew.-%-ige Lösung) zugegeben. Der Kessel wurde auf 70°C aufgeheizt und es wurden 8 bar Stickstoff aufgedrückt. Die Vorlage wurde 30 min anpolymerisiert. Nach diesen 30 min wurde eine 11.2 Gew.-%-ige tert.Butylhydroperoxid (TBHP-Lösung) mit 116 g pro Stunde und eine 2.0 Gew.-%-ige Brüggolitlösung mit 326 g pro Stunde eingefahren. Gleichzeitig wurde begonnen, 2.78 kg Vinylacetat mit einer Rate von 1390 g pro Stunde zu dosieren (Monomerdosierung).
Direkt anschließend wurden die zwei Emulgatordosierungen eingefahren. Die Texapondosierung enthieIt 111,17 g Wasser, und 481.12 g Texapon K12 (10 Gew.-%-ige wässrige Lösung) und wurde mit einer Rate von 297 g/h dosiert. Die Genapoldosierung enthielt 188.98 g Genapol X050 (100 Gew.-%-ig) und wurde mit einer Rate von 95 g/h dosiert. Die Gesamtdosierzeit für die Monomerdosierung und die Emulgatordosierungen belief sich auf 2 Stunden.
Nach dem Ende der Monomerdosierung bzw. Emulgatordosierung wurde die TBHP- und Brüggolitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen:
Feststoffgehalt: 48.87 %, pH-Wert: 5.47; Brookfield-Viskosität 20 (Spindel 4): 1740 mPas; Glasübergangstemperatur Tg: 26.2 °C; mittlere Teilchengröße: 5022.2 nm (Nanosizer) Coulter: Dn 0.107; Dv 8.422; Oberfläche 7.80 m²; schmier- und klebfreier Film, kein Ausschwitzen von Silikon; Dispersionsfilm hat elastische Eigenschaften.

### Vergleichsbeispiel 23 (15 % Partikel 7, Vinylacetat)

In einem 20 Liter Druckautoklaven wurden 1.19 kg Wasser, 2.83 kg Polyviol W 25/140 (Polyvinylalkohol, 10 Gew.-%-ige Lösung), 48.14 g Genapol X 050 (100 Gew.-%-ig), 122.55 g Texapon K12 (10 Gew.-%-ige wässrige Lösung), 4.44 g Natriumacetat, 566,32 g Vinylacetat, 849.47 g Partikel 7 und 59.61 g Trigonox 23 (Tertiärbutylperoxyneodecanoat, TBPND, 95 Gew.-%-ig in Aliphaten - öllöslicher Initiator) vorgelegt. Mit 10 Gew.-%-iger Ameisensäure wurde auf pH = 5 eingestellt. Ferner wurden 10 ml Trilon B (EDTA; 2 Gew.-%-ige wässrige Lösung) und 31 ml Eisenammonsulfat (1 Gew.-%-ige Lösung) zugegeben. Der Kessel wurde auf 70°C aufgeheizt und es wurden 8 bar Stickstoff aufgedrückt. Die Vorlage wurde 30 min anpolymerisiert. Nach diesen 30 min wurde eine 11.2 Gew.-%-ige tert.Butylhydroperoxid (TBHP-Lösung) mit 118 g pro Stunde und eine 2,0 Gew.-%-ige Brüggolitlösung mit 332 g pro Stunde eingefahren. Gleichzeitig wurde begonnen, 4.25 kg Vinylacetat mit einer Rate von 2125 g pro Stunde zu dosieren (Monomerdosierung)
Direkt anschließend wurden die zwei Emulgatordosierungen eingefahren. Die Texapondosierung enthielt 113.26 g Wasser, und 490.2 g Texapon K12 (10 Gew.-%-ige wässrige Lösung) und wurde mit einer Rate von 302 g/h dosiert. Die Genapoldosierung enthielt 192.55 g Genapol X050 (100 Gew.-%-ig) und wurde mit einer Rate von 96 g/h dosiert. Die Gesamtdosierzeit für die Monomerdosierung und die Emulgatordosierungen belief sich auf 2 Stunden.

Nach dem Ende der Monomerdosierung bzw. Emulgatordosierung wurde die TBHP- und Brüggolitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen: Feststoffgehalt: 49.81 %, pH-Wert: 5.37; Brookfield-Viskosität 20 (Spindel 4): 1875 mPas; Glasübergangstemperatur Tg: 22.9 °C; mittlere Teilchengröße: 716.6 nm (Nanosizer) Coulter: Dn 0.273; Dv 4.063; Oberfläche 6.22 m²; schmier- und klebfreier Film, kein Ausschwitzen von Silikon; Dispersionsfilm hat elastische Eigenschaften.

### Beispiele 24 bis 28:

In zwei 1000 ml-Gefäßen wurden gemäß den Daten in Tabelle 1 jeweils separat die Anteile der Öl(Ö)- und Wasserphase(W) durch Rühren homogenisiert. Anschließend wurden Öl- und Wasserphase vereinigt und mittels eines Ultrahochdruckhomogenisators der Firma Avestin bei Drücken zwischen 400 und 800 bar in einem Durchlauf homogenisiert. Die entstandene Miniemulsion wurde in einen doppelwandigen, thermostatisierbaren 1000 ml-Polymerisationsreaktor mit Ankerrührer gefüllt und unter Rühren auf 40°C erhitzt. Durch Zugabe der Reduktionsmitteldosierung (5 %-ige Lösung von Natriumformaldehysulfoxylat in entionisiertem Wasser, Dosiergeschwindigkeit 105 µl/min) wurde die Reaktion gestartet. Der Verlauf der Polymerisation wurde mittels Gravimetrie verfolgt. Die Polymerisation war im Regelfall nach 5 Stunden beendet.

Die Mengenangaben für die Reaktionskomponenten der Beispiele 24 bis 28 sind jeweils als Massenprozente zu verstehen.
(O): Ölphase; (W): Wasserphase.

Beim Partikel P handelt es sich um ein Methylsiliconharz aus 61 % M-Einheiten und 39 % Q-Einheiten, dessen Oberfläche mit Methacryloylmethylgruppen belegt ist und gemäß obiger Methode 1 hergestellt wurde.

**Tabelle 1:**

| Komponente | 24 | 25 | 26 | 27 | 28 |
|---|---|---|---|---|---|
| Wasser (W) | 70.08 | 68.19 | 50.02 | 49.97 | 50.45 |
| Na-laurylsulfat(W) | 2.77 | 2.70 | 1.03 | 1.03 | 1.01 |
| Na-vinylsulfonat(W) | 0.28 | 0.27 | -- | -- | -- |
| Acrylsäure (W) | 0.28 | 0.27 | -- | -- | -- |
| Ammoniumpersulfat (W) | 0.28 | 0.27 | 0.30 | 0.39 | 0.62 |
| Na-hydrogencarbonat (W) | -- | -- | 0.08 | 0.08 | 0.10 |
| Butylacrylat (O) | 11.08 | 10.78 | 20.61 | 20.59 | 17.15 |
| Methylmethacrylat (O) | 11.08 | 10.78 | 18.19 | 18.17 | 15.74 |
| Butylmethacrylat (O) | -- | -- | -- | 3.03 | 4.04 |
| Styrol (O) | 1.11 | 1.08 | 3.03 | -- | 2.42 |
| Partikel P (O) | 2.77 | 5.39 | 5.15 | 5.15 | 5.05 |
| Methacrylatomethyltriethoxysilan(O) | -- | -- | 0.61 | 0.61 | 0.92 |
| Cetylalkohol (O) | 0.28 | 0.27 | 0.99 | 0.98 | 0.92 |

Die entstandenen Dispersionen wiesen folgende analytische Eigenschaften auf (Tabelle 2):

**Tabelle 2:**

| Eigenschaften | 24 | 25 | 26 | 27 | 28 |
|---|---|---|---|---|---|
| Festgehalt [%] | 29 | 29 | 46 | 45 | 48 |
| Partikelgröße [nm] | 120 | 120 | 160 | 135 | 117 |
| PDI [Dw/Dn] | 1.43 | 1.55 | 1.11 | 1.13 | 1.60 |
| Viskosität [mPas 50s⁻¹] | 3.8 | 4.0 | 7.7 | 19 | 13 |
| Tg [°C] | 27 | 30 | 33 | 32 | 33 |

### Anwendungsbeispiele Bautenschutzbeschichtungsmittel:

In den folgenden Anwendungsbeispielen beziehen sich alle Angaben von Teilen und Prozentsätzen auf das Gewicht, falls nicht anders angegeben.

### Beispiel 29: Bautenschutzbeschichtungsmittel:

Als nanopartikelhaltige Organocopolymerdispersion wurde in diesem Beispiel die aus Beispiel 4 (Methylsiliconharz mit einem M:Q Verhältnis von 39:61, α-methacrylatosilanfunktionell, copolymerisiert mit Butylacrylat und Methylmethacrylat zu einem Copolymer, Gehalt an Nanopartikel 10 Gew.-% auf Bindemittel) verwendet.

Vermischt wurden in einem handelsüblichen, schnelllaufenden Rührwerk zur Herstellung von wässrigen Bautenschutzbeschichtungen in dieser Reihenfolge:
184 Gewichtsteile Wasser
10 Gewichtsteile Acrylatverdicker
5 Gewichtsteile Pigmentverteiler
255 Gewichtsteile Titandioxid Pigment
520 Gewichtsteile nanopartikelhaltige Organocopolymerdispersion
2 Gewichtsteile antimikrobielles Konservierungsmittel
20 Gewichtsteile Filmbildehilfsmittel
2 Gewichtsteile 30 Gew.-%-ige wässrige Ammoniaklösung
2 Gewichtsteile Antischaummittelzubereitung aus Mineralöl, Paraffin und Siliconöl
Ergibt: 1000 Gewichtsteile Bautenschutzbeschichtung.

### Beispiel 30: Bautenschutzbeschichtungsmittel:

Als nanopartikelhaltige Organocopolymerdispersion wurde in diesem Beispiel die aus Beispiel 5 verwendet (Nanopartikel: Methylsiliconharz mit einem M:Q Verhältnis von 39:61, α-methacrylatosilanfunktionell, copolymerisiert mit Butylacrylat und Methylmethacrylat zu einem Copolymer. Gehalt an Nanopartikel 20 Gew.-% auf Bindemittel).

Vermischt wurden in einem handelsüblichen, schnelllaufenden Rührwerk zur Herstellung von wässrigen Bautenschutzbeschichtungen in dieser Reihenfolge:
184 Gewichtsteile Wasser
10 Gewichtsteile Acrylatverdicker
5 Gewichtsteile Pigmentverteiler
255 Gewichtsteile Titandioxid Pigment
520 Gewichtsteile nanopartikelhaltige Organocopolymerdispersion
2 Gewichtsteile Antimikrobielles Konservierungsmittel
20 Gewichtsteile Filmbildehilfsmittel
2 Gewichtsteile 30 Gew.-%-ige wässrige Ammoniaklösung
2 Gewichtsteile Antischaummittelzubereitung aus Mineralöl, Paraffin und Siliconöl
Ergibt: 1000 Gewichtsteile Bautenschutzbeschichtung.

### Beispiel 31: Bautenschutzbeschichtungsmittel

Als nanopartikelhaltige Organocopolymerdispersion wurde in diesem Beispiel die aus Beispiel 7 verwendet (Nanopartikel: nano-SiO₂; (Partikelgröße 5 - 20 nm), α-methacrylatosilanfunktionell copolymerisiert mit Butylacrylat und Methylmethacrylat zu einem Copolymer; Gehalt an Nanopartikel 10 Gew.-% auf Bindemittel).

Vermischt wurden in einem handelsüblichen, schnelllaufenden Rührwerk zur Herstellung von wässrigen Bautenschutzbeschichtungen in dieser Reihenfolge:
184 Gewichtsteile Wasser
10 Gewichtsteile Acrylatverdicker
5 Gewichtsteile Pigmentverteiler
255 Gewichtsteile Titandioxid Pigment
520 Gewichtsteile nanopartikelhaltige Organocopolymerdispersion
2 Gewichtsteile Antimikrobielles Konservierungsmittel
20 Gewichtsteile Filmbildehilfsmittel
2 Gewichtsteile 30 Gew.-%-ige wässrige Ammoniaklösung
2 Gewichtsteile Antischaummittelzubereitung aus Mineralöl, Paraffin und Siliconöl
Ergibt: 1000 Gewichtsteile Bautenschutzbeschichtung.

### Beispiel 32: Bautenschutzbeschichtungsmittel

Als nanopartikelhaltige Organocopolymerdispersion wurde in diesem Beispiel die aus Beispiel 4 (Nanopartikel: Methylsiliconharz mit einem M:Q Verhältnis von 39:61, α-methacrylatosilanfunktionell copolymerisiert mit Butylacrylat und Methylmethacrylat zu einem Copolymer, Gehalt an Nanopartikel 10 Gew.-% auf Bindemittel) verwendet.

Vermischt wurden in einem handelsüblichen, schnelllaufenden Rührwerk zur Herstellung von wässrigen Bautenschutzbeschichtungen in dieser Reihenfolge:
336 Gewichtsteile Wasser
1 Gewichtsteil Pigmentverteiler
2 Gewichtsteile Fungizid
5 Gewichtsteile Verdicker auf Basis Celluloseether
120 Gewichtsteile Titandioxid Pigment
275 Gewichtsteile Kreide
60 Gewichtsteile Talkum
180 Gewichtsteile nanopartikelhaltige Organocopolymerdispersion
10 Gewichtsteile eines Frühhydrophobieradditives*,
1 Gewichtsteil 30%-ige Ammoniaklösung
Ergibt: 990 Gewichtsteile Baubeschichtungsmittel.
   * Zusammensetzung des Frühhydrophobieradditivs:

55 Gew.-%-ige wässrige Emulsion eines Kondensationsproduktes aus einem in den endständigen Einheiten je eine Si-gebundene Hydroxylgruppe aufweisenden α,ω-Dihydroxymethylpolysiloxan und N(2-Aminoethyl)3-Aminopropyltrimethoxysilan in Gegenwart von KOH mit einer Aminzahl von etwa 0,3 einer Viskosität von etwa 1500 mm²/s bei 25°C und einem Restmethoxygehalt von weniger als 5 mol-% bezogen auf die Anfangs im N(2-aminoethyl)3-amino-propyltrimethoxysilanvorhandenen Methoxygruppen.

Ein Kalksandstein wurde mit einem Pinsel mit 200 g/m² dieser Siliconharzfarbe beschichtet.
Anschließend wurde die Wasseraufnahme geprüft, wobei das Verfahren angewendet wurde, das in DIN EN 1062-3 vom Februar 1999 beschrieben ist. Der verwendete Kalksandstein wies unbeschichtet einen Wasseraufnahmekoeffizienten nach 24 h Wasserlagerung von w₂₄ = 6,19 kg/(m²h^{0,5}) auf.
Der Prüfkörper wurde nach dem Beschichten 1 Woche bei Raumtemperatur getrocknet und danach 24 h im Normklima (23°C ± 2°C, 50 % ± 5 % relative Luftfeuchte) gelagert. Die Konditionierung wurde abweichend von der Norm DIN EN 1062-3 so ausgeführt, dass der Prüfkörper nicht 3 mal je 24 h in frischem Leitungswasser gelagert und danach jeweils getrocknet wurde, sondern der Prüfkörper wurde 72 h durchgehend der Wasserlagerung unterzogen und danach der Wasseraufnahmekoefizient gemäß Norm DIN EN 1062-3 bestimmt. Er betrug w₇₂ = 0,24 kg/(m²h^{0,5}). Danach wurde der Prüfkörper 24 h lang bei 50°C ± 5°C getrocknet und danach einer weiteren Wasseraufnahmeprüfung gemäß Norm Din EN 1062-3 unterzogen, wobei der Wasseraufnahmewert nach 24 h w₂₄ = 0,10 kg/ (m²h^{0,5}) betrug.

Ein weiterer Kalksandstein wurde mit einem Pinsel mit 200 g/m² der Baubeschichtung nach Beispiel 32 beschichtet. Nach 2 h Trocknen bei Raumtemperatur wurde der Kalksandstein um 45° gegen die Waagerechte geneigt und Wasser aus einer Pipette lotrecht auf die Oberfläche getropft. Die Wassertropfen perlen spontan ab.

### Vergleichsbeispiel 33:

Bautenschutzbeschichtungsmittel hergestellt mit einer Siliconacrylatdispersion gemäß Stand der Technik nach EP 635 526 B1

Die Siliconacrylatdispersion gemäß EP 635 526 B1 wurde durch radikalische Emulsionspolymerisation hergestellt.
Als Siliconkomponente wurden dabei 20 Gew.-% eines Polyorganosiloxans eingesetzt, das alpha-omega-funktionell war, wobei es zwei unterschiedliche Substituenten in der alpha- und der omega-Position hatte. Einer der Substituenten war eine Butoxygruppe, die Komponente X aus Formel (I) in EP 635 526 B1 entspricht und der zweite Substituent war eine Propylmethacrylatfunktion, die dem Substituenten Y in Formel (I) in EP 635 526 B1 entspricht. Das Polysiloxan zwischen diesen Substituenten war ein Polydimethylsiloxan mit einer mittleren Kettenlänge von 20 (Me)₂Si-O-Einheiten.
Die organischen Monomeren für die radikalische Polymerisation waren n-Butylacrylat und Methylmethacrylat im Verhältnis 1 : 1.

In einem 1000 ml-Polymerisationsgefäß mit Ankerrührer wurden
7.2 g n-Butylacrylat
3.8 g Styrol
93.7 g Wasser
1.2 g Acrylsäure
0.4 g Natriumdodecylsulfat
0.1 g Natriumvinylsulfonat
je 10 mg Eisen(II)-sulfat und EDTA-Dinatriumsalz auf einen pH-Wert von 6.5 eingestellt und unter Rühren (200 rpm) auf 40°C erhitzt (Vorlage).
In einem ersten Gefäß (Zulauf 1a) wurde eine 10 Gew.-%-ige Lösung von tert.-Butylhydroperoxid in Wasser hergestellt.

In einem zweiten Gefäß (Zulauf 1b) wurde eine 5 Gew.-%-ige Lösung von Natriumhydroxymethansulfinat in Wasser hergestellt.
In einem dritten Gefäß (Zulauf 2) wurde eine Emulsion aus
190.3 g Wasser
3.6 g Acrylsäure
24.0 g des oben beschriebenen Monomethacrylatosiloxans
13.3 g Natriumdodecylsulfat
65.5 g n-Butylacrylat
34.3 g Styrol
hergestellt.
Dabei wurde zunächst das oben beschriebene Monomethacrylatosiloxan im organischen Monomer vollständig gelöst und anschließend emulgiert.
Zulauf 1a und 1b wurden mit einer Dosiergeschwindigkeit von 105 µl/min gestartet und die Vorlage 20 Minuten bei 40°C polymerisiert. Anschließend wurde Zulauf 2 mit einer Dosiergeschwindigkeit von 4 ml/min gestartet und die Monomeremulsion innerhalb 165 min kontinuierlich zudosiert. Nach dem Ende der Dosierung (Zulauf 2) wurde die TBHP- und Brüggolitdosierung noch 1 Stunde fortgesetzt. Dann wurde auf Raumtemperatur abgekühlt. Dispersionsanalyse:
Feststoffgehalt: 32 %, Verfilmung des Polymers: nach Abtrocknen durch Verdunsten des Wassers: schmier- und klebfreier Film, kein Ausschwitzen von Silicon.

Die so erhaltene Dispersion wurde in folgender Rezeptur zu einem Bautenschutzbeschichtungsmittel formuliert:

Vermischt wurden in einem handelsüblichen, schnelllaufenden Rührwerk zur Herstellung von wässrigen Bautenschutzbeschichtungen in dieser Reihenfolge:
184 Gewichtsteile Wasser
10 Gewichtsteile Acrylatverdicker
5 Gewichtsteile Pigmentverteiler
255 Gewichtsteile Titandioxid Pigment
520 Gewichtsteile Dispersion aus diesem Vergleichsbeispiel
2 Gewichtsteile Antimikrobielles Konservierungsmittel
20 Gewichtsteile Filmbildehilfsmittel
2 Gewichtsteile 30 Gew.-%-ige wässrige Ammoniaklösung
2 Gewichtsteile Antischaummittelzubereitung aus Mineralöl, Paraffin und Siliconöl
Ergibt: 1000 Gewichtsteile Bautenschutzbeschichtung.

### Prüfung auf Blockfestigkeit:

Die Bautenschutzbeschichtungsmittel gemäß den Beispielen 29 bis 33 wurden jeweils in einer Menge von 200 g/m² auf jeweils zwei Fichtenholzpanel von 7,5 x 15 cm Fläche und 2 cm Dicke, die auf eine Holzfeuchte von < 10% getrocknet worden waren und auf 2 Kontrastkarten aufgetragen, wie sie z.B. von der Firma BYK Gardener unter der Bestellnummer D 2801 im Katalog 2003/2004 angeboten werden. Die beschichteten Holzpanels wurden nach dem Farbauftrag 7 Tage bei 23°C und 50 % ± 5 % relativer Luftfeuchte gelagert. Die Kontrastkarten wurden nach dem Farbauftrag jeweils 4 h bei 60°C gelagert. Danach wurden die Holzpanels respektive die Kontratskarten jeweils so aufeinander gelegt, dass die beschichteten Seiten zweier Holzpanels bzw. die beschichteten Seiten zweier Kontrastkarten aufeinander zu liegen kamen. Solche Stapel wurden nur von Kontrastkarten bzw. Holzpanels hergestellt, die beide jeweils mit der gleichen Farbe beschichtet waren. Der Kartenstapel respektive der Stapel der Holzpanels wurde mit zwei Gewichten von jeweils 1 kg so beschwert, dass das Gewicht möglichst gleichmäßig über die gesamte Fläche wirkte.
Die Stapel der Holzpanels wurden jeweils 4 h mit einem Gewicht belastet. Danach wurden die Holzpanels wieder voneinander getrennt. Die Trennbarkeit wurde bewertet. Das Bewertungsystem ist dabei ein Benotungsystem von 0 bis 3:
0 bedeutet, dass sich die beiden Holzpanels leicht und ohne Kraftaufwand voneinander trennen lassen und keine Beschädigung der Beschichtungen auf den beiden Holzpanels festzustellen ist.
1 bedeutet, dass sich die Panels nur mit erhöhtem Kraftaufwand trennen lassen, aber ohne Beschädingungen an der Beschichtung zu verursachen.
2 bedeutet, dass sich die Panels nur mit erhöhtem Kraftaufwand trennen lassen und zusätzlich geringfügige, mit bloßem Auge sichtbare Beschädigungen der Beschichtung auftretetn.
3 bedeutet, dass die Panels nicht mehr trennbar sind, oder nur mit sehr großem Aufwand, wobei erhebliche Beschädigungen der Beschichtung auftreten.

Diese Prüfung wurde mit den Holzpanels nach Lagerung bei unterschiedlichen Temperaturen ausgeführt, wobei die Temperaturen 23°C, 30°C, 40°C und 50°C betrugen. Die Stapel wurden bei der jeweiligen Temperatur für jeweils 4 h mit 2 kg Gewicht belastet und danach die Trennbarkeit beurteilt, wobei die Holzpanels im noch warmen Zustand voneinander getrennt wurden. Die Kontrastkartenstapel wurden ebenfalls mit 2 kg Gewicht belastet, wobei die Belastungszeit 24 h betrug und nur bei 23°C stattfand. Auch hier wurde die Trennbarkeit beurteilt, wobei das gleiche Bewertungsystem verwendet wurde, wie für die Holzpanels zuvor beschrieben.

Die folgende Tabelle gibt einen Überblick über die erzielten Blockwerte auf den Holzpanels und mit den Kontrastkarten

| Beispiel | Kontrastkarten | Holzpanel 23°C | Holzpanel 30°C | Holzpanel 40°C | Holzpanel 50°C |
|---|---|---|---|---|---|
| Bsp. 29 | 0 | 0 | 0 | 1 | 1 |
| Bsp. 30 | 0 | 0 | 0 | 1 | 1 |
| Bsp. 31 | 0 | 0 | 0 | 0 | 0 |
| Bsp. 32 | 0 | 0 | 0 | 0 | 0 |
| V.bsp. 33 | 2 | 1 | 1 | 2 | 2 |

### Beispiel 34:

### Bautenschutzbeschichtungen mit über- und mit unterkritischer PVK

Folgende zwei Rezepturen wurden durch Vermischen der Bestandteile mit einem schnell drehenden handelsüblichen Rotor Stator Mischgerät zu einer Bautenschutzbeschichtung vermengt. Die eingesetzten Mengen sind in diesem Beispiel in Gramm angegeben.

| | Rezeptur 1 | Rezeptur 2 |
|---|---|---|
| Wasser | 8,75 | 9,48 |
| Topfkonservierer | 0,06 | 0,07 |
| Filmkonservierer | 0,06 | 0,07 |
| PU Verdicker | 0,15 | 0,16 |
| Calgon N | 0,06 | 0,07 |
| Siliconantischaummittel | 0,29 | 0,31 |
| Titandioxid-Pigment | 49,08 | 53,19 |
| Talkum | 4,90 | 5,31 |
| Calciumcarbonat | 14,71 | 15,94 |
| Kaliummethylsiliconatlösung | | |
| 50% in Wasser | 0,06 | 0,07 |
| Filmbildehilfsmittel | 0,87 | 0,94 |
| Dispersion aus Beispiel 4 | 21,03 | 64,40 |
| Total: | 100,0 | 150,0 |
| | PVK 65 % | PVK 40 % |

Die Rezeptur 1 ergab eine poröse Beschichtung, da ihre Pigmentvolumenkonzentration (PVK) über der kritischen PVK lag. Rezeptur 2 ergab einen geschlossenen Film.

Jeweils ein Kalksandstein wurde mit einem Pinsel mit 200 g/m² mit jeweils einer dieser Bautenschutzfarben beschichtet. Anschließend wurde die Wasseraufnahme geprüft, wobei das Verfahren angewendet wurde, das in DIN EN 1062-3 vom Februar 1999 beschrieben ist. Der verwendete Kalksandstein wies unbeschichtet einen Wasseraufnahmekoeffizienten nach 24 h Wasserlagerung von w₂₄ = 1,26 kg/(m²h^{0,5}) auf.
Der Prüfkörper wurde nach dem Beschichten 1 Woche bei Raumtemperatur getrocknet und danach 24 h im Normklima (23°C ± 2°C, 50 % ± 5 % relative Luftfeuchte) gelagert. Die Konditionierung wurde abweichend von der Norm DIN EN 1062-3 so ausgeführt, dass der Prüfkörper nicht 3 mal je 24 h in frischem Leitungswasser gelagert und danach jeweils getrocknet wurde, sondern der Prüfkörper wurde 72 h durchgehend der Wasserlagerung unterzogen. Danach wurde der Prüfkörper 24 h lang bei 50°C ± 5°C getrocknet und danach einer weiteren Wasseraufnahmeprüfung gemäß Norm DIN EN 1062-3 unterzogen, wobei der Wasseraufnahmewert für die Beschichtung gemäß Rezeptur 1 nach 24 h w₂₄ = 0,05 kg/(m²h^{0,5}) betrug, für die Beschichtung nach Rezeptur 2 w₂₄ = 0,03 kg/(m²h^{0,5}).

Jeweils ein weiterer Kalksandstein wurde mit einem Pinsel mit jeweils 200 g/m² einer der Baubeschichtungen nach Rezeptur 1 oder Rezeptur 2 beschichtet. Nach 2 h Trocknen bei Raumtemperatur wurde der Kalksandstein um 45° gegen die Waagerechte geneigt und Wasser aus einer Pipette lotrecht auf die Oberfläche getropft. Die Wassertropfen liefen ab, perlten aber nicht ab. In einem Kontrollexperiment wurde gezeigt, dass man den Abperleffekt erreicht, wenn man zu den Rezepturen 1 und 2 jeweils 1 g eines Frühhydrophobieradditives (analog Beispiel 32) gibt.

Die beiden Bautenschutzbeschichtungsmittel gemäß Rezeptur 1 und Rezeptur 2 wurden dem Blocktest wie oben beschrieben unterzogen, wobei in beiden Fällen bei keiner Temperatur eine Verblockung und Schädigung der Beschichtungen auftrat. Die Beschichtung aus Rezeptur 1 mit der höheren PVK ließ sich graduell besser trennen, als die Beschichtung aus Rezeptur 2 mit der niedrigeren PVK.

## Patentansprüche

1. Copolymerisate von ethylenisch ungesättigten Monomeren und von ethylenisch funktionalisierten Nanopartikeln in Form deren wässrigen Polymerdispersionen oder in Wasser redispergierbaren Polymerpulver, erhältlich mittels radikalisch initiierter Polymerisation in wässrigem Medium, und gegebenenfalls anschließender Trocknung der dabei erhaltenen Polymerdispersion, von
A) einem oder mehreren Monomeren aus der Gruppe umfassend Vinylester, (Meth)acrylsäureester, Vinylaromaten, Olefine, 1,3-Diene, Vinylether und Vinylhalogenide und gegebenenfalls weiteren damit copolymerisierbaren Monomeren, in Gegenwart von
B) mindestens einem Partikel P mit einem mittleren Durchmesser von ≤ 1000 nm, welches mit ethylenisch ungesättigten, radikalisch polymerisierbaren Gruppen funktionalisiert ist, **dadurch gekennzeichnet, dass**
B1) als Partikel P ein oder mehrere aus der Gruppe der Metalloxide und Halbmetalloxide eingesetzt werden, und/oder
B2) als Partikel P Siliconharze eingesetzt werden, welche aus Wiederholungseinheiten der allgemeinen Formel
[R⁴_{(p+z)}SiO_{(4-p-z)/2}] (II) aufgebaut sind, wobei R4 gleich oder verschieden ist, und Wasserstoff-, Hydroxy-, sowie Alkyl-, Cycloalkyl-, Aryl-, Alkoxy- oder Aryloxyreste bedeutet, mit jeweils bis zu 18 C-Atomen, welche gegebenenfalls substituiert sein können, wobei für mindestens 20 Mol-% des jeweiligen Siliconharzes p + z = 0, 1 oder 3 beträgt, und wobei B1) und B2) jeweils mit einem oder mehreren α-Organosilanen der allgemeinen Formel (R¹O)₃₋ₙ(R²)ₙSi-(CR³₂)-X (I) funktionalisiert werden, wobei R¹ für Wasserstoff, einen Alkylrest mit 1 bis 6 Kohlenstoffatomen oder einen Arylrest steht, R² und R³ jeweils jeweils unabhängig voneinander für Wasserstoff, einen Alkylrest mit 1 bis 12 Kohlenstoffatomen oder einen Arylrest stehen, n die Werte 0, 1 oder 2 bedeuten kann, und X ein Rest mit 2 bis 20 Kohlenwasserstoffatomen mit einer ethylenisch ungesättigten Gruppe ist.

2. Copolymerisate nach Anspruch 1, **dadurch gekennzeichnet, dass** in der Polymerdispersion oder im Polymerpulver noch bis zu 30 Gew-%, bezogen auf das Gesamtgewicht der Komponenten A) und B), mindestens eines Silans der allgemeinen Formel (R⁵)₄₋ₘ-Si-(OR⁶)ₘ (III) enthalten ist, wobei m eine Zahl im Wert von 1, 2, 3 oder 4 bedeutet, R⁵ ein organofunktioneller Rest ist, ausgewählt aus der Gruppe Alkoxyrest, Aryloxyrest, Phosphonsäuremonoesterrest, Phosphonsäurediesterrest, Phosphonsäurerest, Methacryloyloxyrest, Acryloyloxyrest, Vinylrest, Mercaptorest, Isocyanatorest, wobei der Isocyanatorest gegebenenfalls zum Schutze vor chemischen Reaktionen reaktionsblockiert sein kann, Hydroxyrest, Hydroxyalkyrest, Epoxyrest, Glycidyloxyrest, Morpholinorest, Piperazinorest, einen primären, sekundären oder tertiären Aminorest mit einem oder mehreren Stickstoffatomen, wobei die Stickstoffatome durch Wasserstoff oder einwertige aromatische, aliphatische oder cycloaliphatische Kohlenwasserstoffreste substituiert sein können, Carbonsäurerest, Carbonsäureanhydridrest, Aldehydrest, Urethanrest, Harnstoffrest, wobei der Rest R⁵ unmittelbar am Siliciumatom gebunden sein kann oder durch eine Kohlenstoffkette von 1 bis 6 C-Atomen davon getrennt sein kann und R⁶ einen einwertigen linearen oder verzweigten aliphatischen oder cycloaliphatischen Kohlenwasserstoffrest oder einen einwertigen aromatischen Kohlenwasserstoffrest oder einen Rest -C(=O)-R⁷ bedeutet, wobei R⁷ einen einwertigen linearen oder verzweigten aliphatischen oder einen cycloaliphatischen Kohlenwasserstoffrest oder einen einwertigen aromatischen Kohlenwasserstoffrest bedeutet.

3. Copolymerisate nach Anspruch 1 oder 2, **dadurch gekennzeichnet, dass** als Comonomere A) ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol, 1,3-Butadien eingesetzt werden.

4. Copolymerisate nach Anspruch 1 bis 3, **dadurch gekennzeichnet, dass** das α-Organosilan der Formel (R¹O)₃₋ₙ(R²)ₙSi-(CR³₂)-X (I) als Reste R¹ und R² unsubstituierte Alkylgruppen mit 1 bis 6 C-Atomen und als Rest R³ Wasserstoff, und als Rest X einfach ungesättigte C₂- bis C₁₀-Reste enthält.

5. Copolymerisate nach Anspruch 1 bis 4, **dadurch gekennzeichnet, dass** als Partikel P aus der Gruppe B1) Siliciumoxide und Oxide der Metalle Aluminium, Titan, Zirkonium, Tantal, Wolfram, Hafnium, Zink und Zinn eingesetzt werden.

6. Copolymerisate nach Anspruch 5, **dadurch gekennzeichnet, dass** als Siliciumoxide kolloidale Kieselsäure, pyrogene Kieselsäure, gefällte Kieselsäure, Kieselsole eingesetzt werden.

7. Copolymerisate nach Anspruch 1 bis 4, **dadurch gekennzeichnet, dass** als Partikel P aus der Gruppe B2) Siliconharze der allgemeinen Formel [R⁴_{(p+z)}SiO_{(4-p-z)/2}] eingesetzt werden, die sich zu mindestens 30 Mol-% aus Q-Einheiten aufbauen, und für die p+z die Bedeutung 0 hat.

8. Copolymerisate nach Anspruch 1 bis 4, **dadurch gekennzeichnet, dass** als Partikel P aus der Gruppe B2) Siliconharze der allgemeinen Formel [R⁴_{(p+z)}SiO_{(4-p-z)/2}] eingesetzt werden, die nur aus M- und Q-Einheiten aufgebaut sind, und für die p+z die Bedeutung 0 und 3 hat.

9. Copolymerisate nach Anspruch 1 bis 4, **dadurch gekennzeichnet, dass** als Partikel P aus der Gruppe B2) Siliconharze der allgemeinen Formel [R⁴_{(p+z)}SiO_{(4-p-z)/2}] eingesetzt werden, die aus einer beliebigen Kombination von M-Einheiten (R₃SiO-), D-Einheiten (-OSiR₂O-), T-Einheiten (RSiO₃³⁻) und Q-Einheiten (SiO₄⁴⁻) bestehen, mit der Maßgabe, dass stets T- und/oder Q-Einheiten enthalten sind und ihr Anteil an den Einheiten, die das Siliconharz aufbauen, in Summe mindestens 20 Mol-% beträgt und bei Vorlage jeweils nur einer dieser Einheiten ihr Anteil jeweils mindestens 20 Mol-% ist.

10. Copolymerisate nach Anspruch 1 bis 9, **dadurch gekennzeichnet, dass** der mittlere Durchmesser der Partikel P 1 bis 100 nm beträgt.

11. Verfahren zur Herstellung der Copolymerisate von ethylenisch ungesättigten Monomeren und von ethylenisch funktionalisierten Nanopartikeln in Form deren wässrigen Polymerdispersionen oder in Wasser redispergierbaren Polymerpulver nach Anspruch 1 bis 10, mittels Suspensions-, Emulsions- oder Miniemulsionspolymerisation.

12. Verfahren zur Herstellung der Copolymerisate nach Anspruch 1 bis 10, mittels Suspensions-, Emulsions- oder Miniemulsionspolymerisation und Trocknung der damit erhaltenen Dispersionen mittels Sprühtrocknung.

13. Verwendung der Copolymerisate von ethylenisch ungesättigten Monomeren und von ethylenisch funktionalisierten Nanopartikeln in Form deren wässrigen Polymerdispersionen oder in Wasser redispergierbaren Polymerpulver nach Anspruch 1 bis 10, zur Herstellung von Beschichtungsstoffen und Imprägnierungen und zur Herstellung von Textilien, Teppichen, Bodenbelägen, oder sonstigen aus Fasern herstellbaren Gütern, Leder, Kunststoffe wie Folien, Formteilen.

14. Verwendung der Copolymerisate von ethylenisch ungesättigten Monomeren und von ethylenisch funktionalisierten Nanopartikeln in Form deren wässrigen Polymerdispersionen oder in Wasser redispergierbaren Polymerpulver nach Anspruch 1 bis 10, zur Einarbeitung in Elastomermassen.

15. Verwendung der Copolymerisate von ethylenisch ungesättigten Monomeren und von ethylenisch funktionalisierten Nanopartikeln in Form deren wässrigen Polymerdispersionen oder in Wasser redispergierbaren Polymerpulver nach Anspruch 1 bis 10, in Baustoffbeschichtungsmitteln.

## Claims

1. Copolymers of ethylenically unsaturated monomers and of ethylenically functionalized nanoparticles in the form of their aqueous polymer dispersions or water-redispersible polymer powders, obtainable by means of free-radically initiated polymerization in an aqueous medium and, if desired, subsequent drying of the resultant polymer dispersion, of
A) one or more monomers from the group consisting of vinyl esters, (meth)acrylic esters, vinylaromatics, olefins, 1,3-dienes, vinyl ethers and vinyl halides and, if desired, further monomers copolymerizable therewith, in the presence of
B) at least one particle P having an average diameter of ≤ 1000 nm, which is functionalized with ethylenically unsaturated, free-radically polymerizable groups,
**characterized in that**
B1) particles P used are one or more from the group of metal oxides and semimetal oxides, and/or
B2) particles P used are silicone resins composed of repeating units of the general formula
[R⁴(_{p+z)}SiO_{(4-p-z)/2}] (II), each R⁴ being identical or different and denoting hydrogen, hydroxyl, or alkyl, cycloalkyl, aryl, alkoxy or aryloxy radicals each having up to 18 carbon atoms and being able to be optionally substituted, where for at least 20 mol% of the respective silicone resin p + z = 0, 1 or 3,
and where B1) and B2) are each functionalized with one or more α-organosilanes of the general formula (R¹O)₃₋ₙ(R²)ₙSi-(CR³₂)-X (I), where R¹ is hydrogen, an alkyl radical having 1 to 6 carbon atoms or an aryl radical, R² and R³ each independently of one another are hydrogen, an alkyl radical having 1 to 12 carbon atoms or an aryl radical, n can be 0, 1 or 2 and X is a radical having 2 to 20 hydrocarbon atoms and containing an ethylenically unsaturated group.

2. Copolymers according to Claim 1, **characterized in that** in the polymer dispersion or in the polymer powder there is additionally up to 30% by weight, based on the total weight of components A) and B), of at least one silane of the general formula (R⁵)₄₋ₘ-Si-(OR⁶)ₘ (III), where m is a number of value 1, 2, 3 or 4, R⁵ is an organofunctional radical selected from the group of alkoxy radical, aryloxy radical, phosphonic monoester radical, phosphonic diester radical, phosphonic acid radical, methacryloyloxy radical, acryloyloxy radical, vinyl radical, mercapto radical, isocyanato radical, the isocyanato radical being able optionally to be reaction-blocked for protection against chemical reactions, hydroxyl radical, hydroxyalkyl radical, epoxy radical, glycidyloxy radical, morpholino radical, piperazino radical, a primary, secondary or tertiary amino radical having one or more nitrogen atoms, it being possible for the nitrogen atoms to be substituted by hydrogen or by monovalent aromatic, aliphatic or cycloaliphatic hydrocarbon radicals, carboxylic acid radical, carboxylic anhydride radical, aldehyde radical, urethane radical, urea radical, it being possible for the radical R⁵ to be attached directly to the silicon atom or to be separated therefrom by a carbon chain of 1 to 6 carbon atoms, and R⁶ being a monovalent linear or branched aliphatic or cycloaliphatic hydrocarbon radical or a monovalent aromatic hydrocarbon radical or a radical -C(=O)-R⁷, R⁷ being a monovalent linear or branched aliphatic or a cycloaliphatic hydrocarbon radical or a monovalent aromatic hydrocarbon radical.

3. Copolymers according to Claim 1 or 2, **characterized in that** comonomers A) used are one or more monomers from the group of vinyl acetate, vinyl esters of α-branched monocarboxylic acids having 9 to 11 carbon atoms, vinyl chloride, ethylene, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, styrene and 1,3-butadiene.

4. Copolymers according to Claims 1 to 3, **characterized in that** the α-organosilane of the formula (R¹O)₃₋ₙ(R²)ₙSi-(CR³₂)-X (I) contains as radicals R¹ and R² unsubstituted alkyl groups having 1 to 6 carbon atoms and as radical R³ hydrogen, and as radical X monounsaturated C₂ to C₁₀ radicals.

5. Copolymers according to Claims 1 to 4, **characterized in that** particles P used are particles from the group B1) of silicas and oxides of the metals aluminium, titanium, zirconium, tantallum, tungsten, hafnium, zinc and tin.

6. Copolymers according to Claim 5, **characterized in that** silicas used are colloidal silica, pyrogenic or fumed silica, precipitated silica, or silica sols.

7. Copolymers according to Claims 1 to 4, **characterized in that** particles P used are particles from the group B2) of silicone resins of the general formula [R⁴_{(p+z)}SiO_{(4-p-z)/2}] composed of at least 30 mol% of Q units and for which p+z has the definition 0.

8. Copolymers according to Claims 1 to 4, **characterized in that** particles P used are particles from the group B2) of silicone resins of the general formula [R⁴_{(p+z)}SiO_{(4-p-z)/2}] composed of only M units and Q units and for which p+z has the definition 0 and 3.

9. Copolymers according to Claims 1 to 4, **characterized in that** particles P used are particles from the group B2) of silicone resins of the general formula [R⁴_{(p+z)}SiO_{(4-p-z)/2}] which are composed of an arbitrary combination of M units (R₃SiO-), D units (-OSiR₂O-), T units (RSiO₃³⁻) and Q units (SiO₄⁴⁻), with the proviso that T units and/or Q units are always present and that their fraction as a proportion of the units of which the silicone resin is composed totals at least 20 mol% and, where only one of these units is present, its fraction is at least 20 mol% in each case.

10. Copolymers according to Claims 1 to 9, **characterized in that** the average diameter of the particles P is 1 to 100 nm.

11. Process for preparing the copolymers of ethylenically unsaturated monomers and of ethylenically functionalized nanoparticles in the form of their aqueous polymer dispersions or water-redispersible polymer powders according to Claims 1 to 10, by means of suspension polymerization, emulsion polymerization or miniemulsion polymerization.

12. Process for preparing the copolymers according to Claims 1 to 10, by means of suspension polymerization, emulsion polymerization or miniemulsion polymerization, and drying of the resultant dispersions by means of spray drying.

13. Use of the copolymers of ethylenically unsaturated monomers and of ethylenically functionalized nanoparticles in the form of their aqueous polymer dispersions or water-redispersible polymer powders according to Claims 1 to 10 for preparing coating materials and impregnating systems and for producing textiles, carpets, floor coverings, or other goods which can be produced from fibres, leather, or plastics such as films and mouldings.

14. Use of the copolymers of ethylenically unsaturated monomers and of ethylenically functionalized nanoparticles in the form of their aqueous polymer dispersions or water-redispersible polymer powders according to Claims 1 to 10 for incorporation into elastomer compounds.

15. Use of the copolymers of ethylenically unsaturated monomers and of ethylenically functionalized nanoparticles in the form of their aqueous polymer dispersions or water-redispersible polymer powders according to Claims 1 to 10 in architectural coating compositions.

## Revendications

1. Produits de copolymérisation de monomères à insaturation éthylénique et de nanoparticules à fonctionnalisation éthylénique, sous forme de leurs dispersions de polymères ou de poudres de polymères redispersables dans l'eau, pouvant être obtenus par polymérisation à amorçage radicalaire en milieu aqueux, et éventuellement séchage subséquent de la dispersion de polymère ainsi obtenue, de
A) un ou plusieurs monomères choisis dans le groupe comprenant des esters vinyliques, des esters d'acide (méth)acrylique, des composés vinylaromatiques, des oléfines, des 1,3-diènes, des éthers vinyliques et des halogénures de vinyle et éventuellement d'autres monomères copolymérisables avec ceux-ci, en présence de
B) au moins une particule P ayant un diamètre moyen de ≤ 1 000 nm, qui est fonctionnalisée avec des groupes à insaturation éthylénique, aptes à la polymérisation radicalaire, **caractérisés en ce que**
B1) on utilise en tant que particule P un ou plusieurs des oxydes choisis dans le groupe des oxydes métalliques et des oxydes semi-métalliques, et/ou
B2) on utilise en tant que particules P des résines silicone qui sont constituées de motifs répétitifs de formule générale
[R⁴_{(p+z)}SiO_{(4-p-z)/2}] (II) , R⁴ étant identique ou différent et représentant un atome d'hydrogène, des radicaux hydroxy ainsi qu'alkyle, cycloalkyle, aryle, alcoxy ou aryloxy, ayant chacun jusqu'à 18 atomes de carbone, qui peuvent éventuellement être substitués, dans au moins 20 % en moles de la résine silicone respective la somme p+z étant égale à 0, 1 ou 3, et B1) et B2) étant fonctionnalisés chacun avec un ou plusieurs α-organosilanes de formule générale
(R¹O)₃₋ₙ(R²)ₙSi-(CR³₂)-X (I), dans laquelle R¹ représente un atome d'hydrogène, un radical alkyle ayant de 1 à 6 atomes de carbone ou un radical aryle, R² et R³ représentent chacun, indépendamment l'un de l'autre, un atome d'hydrogène, un radical alkyle ayant de 1 à 12 atomes de carbone ou un radical aryle, n peut représenter les valeurs 0, 1 ou 2, et X est un radical ayant de 2 à 20 atomes de carbone, comportant un groupe à insaturation éthylénique.

2. Produits de copolymérisation selon la revendication 1, **caractérisés en ce que** dans la dispersion de polymère ou dans la poudre de polymère sont encore contenus jusqu'à 30 % en poids, par rapport au poids total des composants A) et B), d'au moins un silane de formule générale (R⁵)₄₋ₘ-Si-(OR⁶)ₘ (III), dans laquelle m représente un nombre ayant la valeur de 1, 2, 3 ou 4, R⁵ est un radical organofonctionnel choisi dans l'ensemble constitué par un radical alcoxy, un radical aryloxy, un radical monoester d'acide phosphorique, un radical diester d'acide phosphorique, un reste d'acide phosphorique, un radical méthacryloyloxy, un radical acryloyloxy, un radical vinylique, un radical mercapto, un radical isocyanato, le radical isocyanato pouvant éventuellement être bloqué pendant la réaction pour la protection contre des réactions chimiques, un radical hydroxy, un radical hydroxyalkyle, un radical époxy, un radical glycidyloxy, un radical morpholino, un radical pipérazino, un radical amino primaire, secondaire ou tertiaire comportant un ou plusieurs atomes d'azote, les atomes d'azote pouvant être substitués par l'atome d'hydrogène ou par des radicaux hydrocarbonés aromatiques, aliphatiques ou cycloaliphatiques monovalents, un reste d'acide carboxylique, un reste d'anhydride d'acide carboxylique, un reste d'aldéhyde, un reste d'uréthanne, un reste d'urée, le radical R⁵ pouvant être lié directement à l'atome de silicium ou en être séparé par une chaîne carbonée de 1 à 6 atomes de carbone, et R⁶ représentant un radical hydrocarboné aliphatique linéaire ou ramifié ou cycloaliphatique, monovalent, ou un radical hydrocarboné aromatique monovalent ou un radical -C(=O)-R⁷, R⁷ représentant un radical hydrocarboné aliphatique linéaire ou ramifié, monovalent, ou un radical hydrocarboné cycloaliphatique ou un radical hydrocarboné aromatique monovalent.

3. Produits de copolymérisation selon la revendication 1 ou 2, **caractérisés en ce qu'**on utilise en tant que comonomères A) un ou plusieurs monomères choisis dans le groupe constitué par l'acétate de vinyle, des esters vinyliques d'acides monocarboxyliques α-ramifiés ayant de 9 à 11 atomes de carbone, le chlorure de vinyle, l'éthylène, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, le styrène, le 1,3-butadiène.

4. Produits de copolymérisation selon l'une quelconque des revendications 1 à 3, **caractérisés en ce que** l'α-organosilane de formule (R¹O)₃₋ₙ(R²)ₙSi-(CR³₂)-X (I) contient en tant que radicaux R¹ et R² des groupes alkyle non substitués ayant de 1 à 6 atomes de carbone et en tant que radical R³ un atome d'hydrogène, et en tant que radical X des radicaux en C₂-C₁₀ mono-insaturés.

5. Produits de copolymérisation selon l'une quelconque des revendications 1 à 4, **caractérisés en ce qu'**on utilise en tant que particule P choisie dans le groupe B1) des oxydes de silicium et des oxydes des métaux aluminium, titane, zirconium, tantale, tungstène, hafnium, zinc et étain.

6. Produits de copolymérisation selon la revendication 5, **caractérisés en ce qu'**on utilise en tant qu'oxydes de silicium de l'acide silicique colloïdal, de l'acide silicique pyrogéné, de l'acide silicique précipité, des sols de silice.

7. Produits de copolymérisation selon l'une quelconque des revendications 1 à 4, **caractérisés en ce qu'**on utilise en tant que particule P choisie dans le groupe B2) des résines silicone de formule générale [R⁴_{(p+z)}SiO_{(4-p-z)/2}], qui sont constituées à raison d'au moins 30 % en moles de motifs Q et pour lesquelles la somme p+z a la valeur 0.

8. Produits de copolymérisation selon l'une quelconque des revendications 1 à 4, **caractérisés en ce qu'**on utilise en tant que particule P choisie dans le groupe B2) des résines silicone de formule générale [R⁴_{(p+z)}SiO_{(4-p-z)/2}], qui ne sont constituées que de motifs M et Q et pour lesquelles la somme p+z a la valeur 0 et 3.

9. Produits de copolymérisation selon l'une quelconque des revendications 1 à 4, **caractérisés en ce qu'**on utilise en tant que particule P choisie dans le groupe B2) des résines silicone de formule générale [R⁴_{(p+z)}SiO_{(4-p-z)/2}] qui sont constituées d'une association quelconque de motifs M (R₃SiO-), de motifs D (-OSiR₂O-), de motifs T (RSiO₃³⁻) et de motifs Q (SiO₄⁴⁻), étant entendu que des motifs T et/ou des motifs Q sont toujours contenus et que sa teneur en les motifs qui constituent la résine silicone est au total d'au moins 20 % en moles et que lors de la disposition au préalable de chaque fois seulement l'un de ce motifs sa concentration est chaque fois d'au moins 20 % en moles.

10. Produits de copolymérisation selon l'une quelconque des revendications 1 à 9, **caractérisés en ce que** le diamètre moyen des particules P va de 1 à 100 nm.

11. Procédé pour la préparation de produits de copolymérisation de monomères à insaturation éthylénique et de nanoparticules à fonctionnalité éthylénique, sous forme de leurs dispersions aqueuses ou de poudres de polymère redispersables dans l'eau, selon l'une quelconque des revendications 1 à 10, par polymérisation en suspension, en émulsion ou en mini-émulsion.

12. Procédé pour la préparation de produits de copolymérisation selon l'une quelconque des revendications 1 à 10, par polymérisation en suspension, en émulsion ou en mini-émulsion et séchage par séchage par atomisation des dispersions ainsi obtenues.

13. Utilisation des produits de copolymérisation de monomères à insaturation éthylénique et de nanoparticules à fonctionnalisation éthylénique, sous forme de leurs dispersions de polymères ou de poudres de polymères redispersables dans l'eau, selon l'une quelconque des revendications 1 à 10, pour la production de matières de revêtement et d'imprégnations et pour la fabrication de textiles, de tapis, de revêtements de sol ou d'autres articles pouvant être fabriqués à partir de fibres, pour la production du cuir, de matières plastiques telles que des films, des pièces moulées.

14. Utilisation des produits de copolymérisation de monomères à insaturation éthylénique et de nanoparticules à fonctionnalisation éthylénique, sous forme de leurs dispersions de polymères ou de poudres de polymères redispersables dans l'eau, selon l'une quelconque des revendications 1 à 10, pour l'incorporation dans des masses d'élastomères.

15. Utilisation des produits de copolymérisation de monomères à insaturation éthylénique et de nanoparticules à fonctionnalisation éthylénique, sous forme de leurs dispersions de polymères ou de poudres de polymères redispersables dans l'eau, selon l'une quelconque des revendications 1 à 10, dans des produits pour le revêtement de matériaux de construction.
